# EUROPEAN PATENT APPLICATION

(11) **EP 1 876 767 A1**
(43) Date of publication of application: **09.01.2008**
(21) Application number: 06745752.3
(22) Date of filing: 27.04.2006
(51) Int. Cl.: H04L 12/56, H04L 12/28, H04Q 7/22

(54) **CROSSOVER NODE DETECTION METHOD AND CROSSOVER NODE DETECTION PROGRAM FOR CAUSING COMPUTER TO EXECUTE THE METHOD**

(30) Priority: 28.04.2005 JP 2005133611
(71) Applicant: MATSUSHITA ELECTRIC INDUSTRIAL CO., LTD., Osaka 571-8501 (JP)
(72) Inventor: UE, Toyoki, c/o Mats.Electr.Ind.Co.Ltd., IPROC, Chuo-ku, Osaka-shi, Osaka 540-6207 (JP); HORI, Takako, c/o Mats.Electr.Ind.Co.Ltd., IPROC, Chuo-ku, Osaka-shi, Osaka 540-6207 (JP)
(74) Representative: Pautex Schneider, Nicole Véronique
(86) International application number: PCT/JP2006/308824
(87) International publication number: WO 2006/118188

(57) **Abstract**

There is disclosed a technique that provides a crossover node detection method, etc., that enables a mobile node that performs a handover to quickly find a CRN, so that, after the handover is completed, the mobile node can still receive quickly and continuously additional service that was received before the handover. This technique includes the steps of: a mobile node 10 transmitting, to a device that includes past handover history information for the mobile node and other mobile node, a message that includes information required for detecting the crossover node; the device judging, based on information included in the received message, whether corresponding crossover node information is present in the past handover history information included in the device, and when the information is present, transmitting the crossover node information to the mobile node; and the mobile node receiving the crossover node information transmitted by the device.

## Description

### TECHNICAL FIELD

The present invention relates to a crossover node detection method through a handover performed by a mobile node that performs wireless communication, and a crossover node detection program that permits a computer to execute this method, and relates particularly to a crossover node detection method through a handover performed by a mobile node that performs wireless communication employing the mobile IPv6 (Mobile Internet Protocol version 6) protocol, which is the next generation Internet protocol, and a crossover node detection program that permits a computer to execute this method.

### BACKGROUND ART

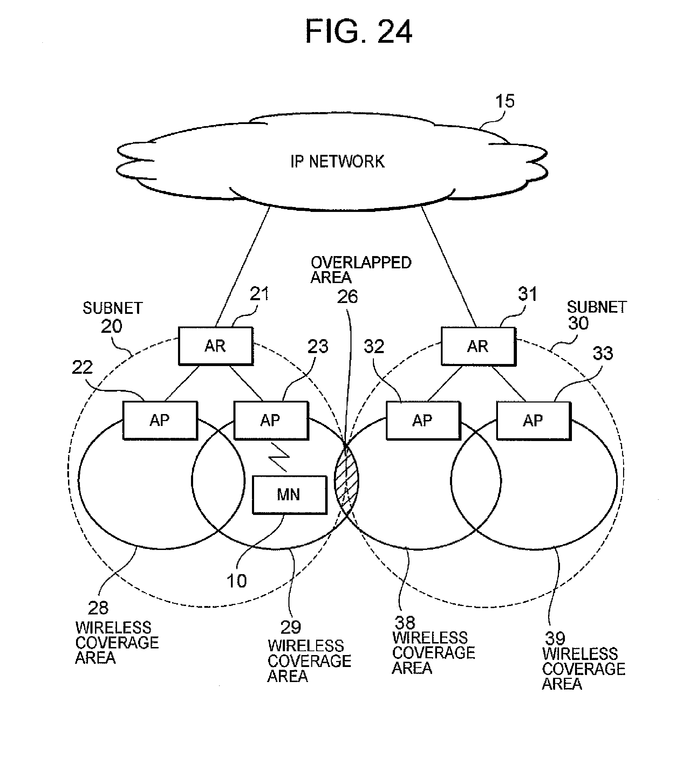

A technique employing the mobile IPv6 that is the next generation Internet protocol has become popular as a technique whereby a seamless connection to a communication network while moving can be provided for users who employ mobile nodes to access a communication network, such as the Internet, via a wireless network. A wireless communication system using this mobile IPv6 will be described while referring to Fig. 24. It should be noted that the following mobile IPv6 technique to be explained is disclosed in, for example, non-patent document 1 below.

The wireless communication system in Fig. 24 includes: an IP network (communication network) 15, such as the Internet; a plurality of subnets (also called subnetworks) 20 and 30 connected to the IP network 15; and a Mobile Node (MN) 10 that can be connected to one of the plurality of subnets 20 and 30. It should be noted that, in Fig. 24, two subnets 20 and 30 are shown as the plurality of subnets 20 and 30.

The subnet 20 includes: an Access Router (AR) 21 that performs routing for an IP packet (packet data); and a plurality of Access Points (APs) 22 and 23 that form unique wireless coverage areas (communication enabled areas) 28 and 29, respectively. These APs 22 and 23 are connected to the AR 21, which is connected to the IP network 15. It should be noted that, in Fig. 24, two APs 22 and 23 are shown as the plurality of APs 22 and 23. Further, the same connection as the above described subnet 20 is provided for the subnet 30 by using an AR 31 and a plurality of APs 32 and 33.

Furthermore, the AR 21 that is the component of the subnet 20 and the AR 31 that is the component of the subnet 30 can communicate with each other via the IP network 15, i.e., the subnet 20 and the subnet 30 are connected to each other via the IP network 15.

Assume that, in the wireless communication system in Fig. 24, the MN 10 starts wireless communication with the AP 23 in the wireless coverage area 29. At this time, in a case wherein an IPv6 address allocated to the MN 10 is not suitable for the IP address system of the subnet 20, the MN 10 that exists in the wireless coverage area 29 obtains, via wireless communication with the AP 23, an IPv6 address suitable for the subnet 20, i.e., a Care of Address (CoA).

As methods whereby the MN 10 obtains a CoA, there are a method whereby a DHCP server allocates a CoA with a state, employing the DHCPv6 (Dynamic Host Configuration Protocol for IPv6) method, etc., and a method whereby the network prefix and the prefix length of the subnet 20 are obtained from the AR 21, and the MN 10 automatically generates a CoA, without a state, by combining the network prefix and the prefix length obtained from the AR 21 with the link layer address of the MN 10, etc.

And the MN 10 registers (Binding Update: BU) the obtained CoA to a router (home agent) on the home network of the MN 10, or a specific Correspondent Node (CN), so that transmission or reception of packet data is enabled in the subnet 20.

In this manner, based on the CoA of the MN 10, packet data transmitted from a predetermined correspondent node to the MN 10 is delivered to the MN 10 via the AR 21 and the AP 23. Also, packet data transmitted from the MN 10 to a desired correspondent node is delivered to the desired correspondent node via the AP 23 and the AR 21. Furthermore, packet data addressed to the MN 10 that is transmitted to the home network is also forwarded to the AR 21 of the subnet 20 based on the CoA of the MN 10 that is registered to the home agent, and is delivered to the MN 10 via the AP 23.

As described above, the wireless communication system in Fig. 24 employing the mobile IPv6 is so designed that, in a case wherein the MN 10 performed a handover from a specific subnet to the other subnet, the MN 10 can continue wireless communication using the CoA. The fast handover technique disclosed in non-patent document 2 below, for example, is known as a technique that increases the speed of this handover processing.

According to this fast handover technique, before the MN 10 performs a L2 handover, the MN 10 obtains, in advance, a new CoA (hereinafter called an NCoA) to be used for the subnet 30, and notifies the AR 21 of this NCoA, and therefore, a tunnel can be formed between the AR 21 and the AR 31. Thus, even in a period since the MN 10 performed the L2 handover and changed the connection from the AP 23 to the AP 32 until the MN 10 moves to the subnet 30 and officially registers (BU) the NCoA that was obtained in advance, packet data addressed to the old (Previous) CoA (hereinafter called a PCoA) of the MN 10 used for the subnet 20 is transferred through the tunnel and via the AR 31 and the AP 32 to the MN 10. And packet data transmitted by the MN 10 is also reached to the AR 21 through the tunnel via the AP 32 and the AR 31, and is forwarded from the AR 21 to the correspondent node.

On the other hand, for communication using a network, there is a service including a QoS (Quality of Service) guarantee (in this specification, this service is called an additional service), and various communication protocols to provide the additional service are present. Among these various communication protocols, the RSVP (Resource Reservation Protocol), for example, is included as a protocol for a QoS guarantee (see, for example, non-patent document 3 below). The RSVP is a protocol according to which a band is reserved for a path (flow) from a transmission side communication terminal that performs data transmission to a reception side communication terminal that performs data reception in order to smoothly transmit data from the transmission side communication terminal to the reception communication terminal.

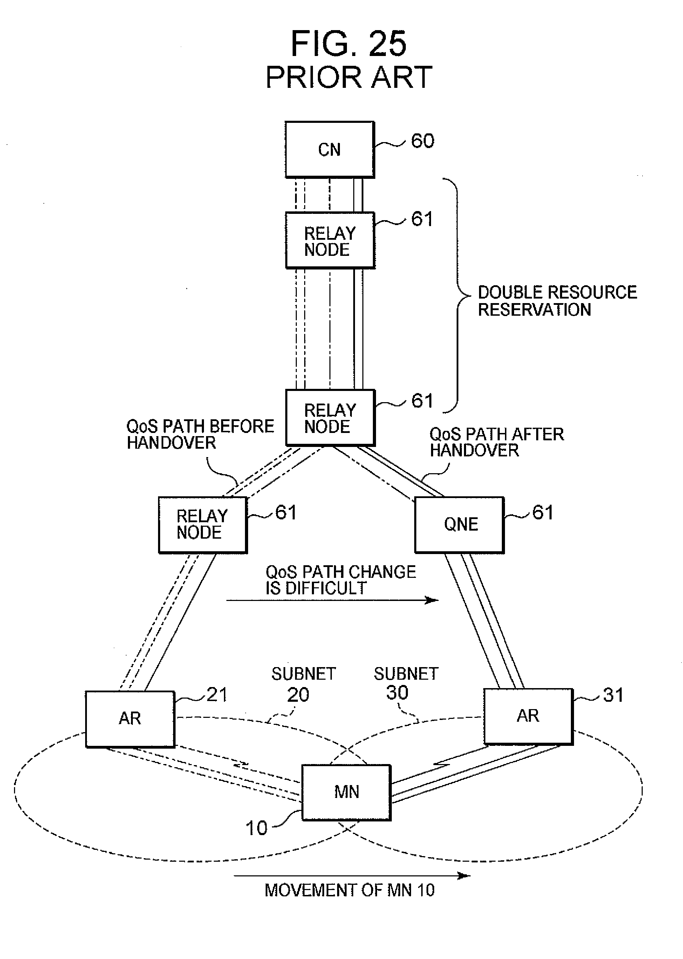

As for the MN 10 that performs a handover between the subnets 20 and 30, there is a request that the additional service, including a QoS guarantee that was received before the handover, should be continuously received after the handover. However, the above described RSVP can not satisfy the above described request especially for the following points, and can not cope with movement of the MN 10. Fig. 25 is a schematic diagram for explaining that the RSVP in prior art can not cope with movement of MN.

According to the RSVP, a QoS path is formed along an end-to-end path from the correspondent node 60 of an MN 10 to the MN 10, and based on the addresses of the MN 10 and the CN 60, data transfer is performed by a plurality of relay nodes 61 that link the end-to-end path. Therefore, for example, in a case wherein the MN 10 has performed the handover between the subnets 20 and 30 and the CoA of the MN 10 is changed, the process related to the address change must be performed in addition to the change of the flow for the QoS path. However, the RSVP can not cope with this change, and as a result, the QoS guarantee collapses (first problem: changing of the QoS path is difficult). In addition, in a case wherein, even when a new QoS path is set, the overlap portion of the QoS path has existed before and after the handover, there is a probability that a double reservation for a resource will occur at the overlap portion (second problem: double resource reservation).

In order to solve the above described problems, at present, standardization of a new protocol called NSIS (Next Step in Signaling) has been discussed by the IETF (Internet Engineering Task Force) (see non-patent document 4). It is anticipated that this NSIS will be especially effective in the mobile environment for various additional services including a QoS guarantee, and there are also documents describing requirements and acquisition methods to obtain a QoS guarantee or a mobility support for the NSIS (see, for example, non-patent documents 5 to 9 below). The overview of the NSIS, currently designated as a draft specification by the IETF NSIS working group, and a QoS path establishment method will now be described (see non-patent document 6 and non-patent document 9).

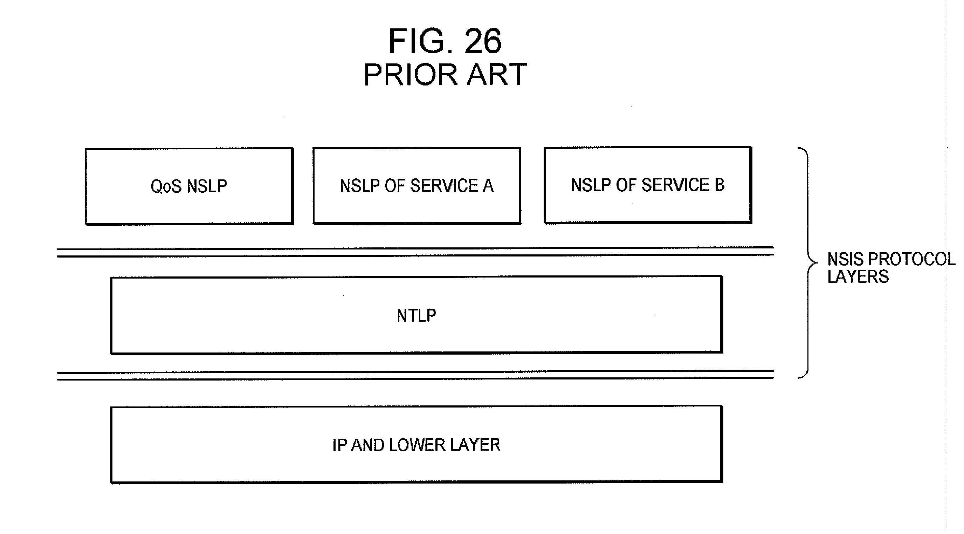

In Fig. 26, the protocol stack for the NSIS and its lower layer is shown in order to explain the protocol structure of the NSIS in the prior art. The NSIS protocol layer is located just above the IP and the lower layer. Further, the NSIS protocol layer is formed of two layers: the NSLP (NSIS Signaling Layer Protocol), which is a protocol for generating and processing a signaling message to provide each additional service, and the NTLP (NSIS Transport Layer Protocol), which is a protocol for performing routing of a NSLP signaling message. There are various NSLPs, such as a NSLP for a QoS (QoS NSLP) and a NSLP for a specific additional service (a service A or a service B).

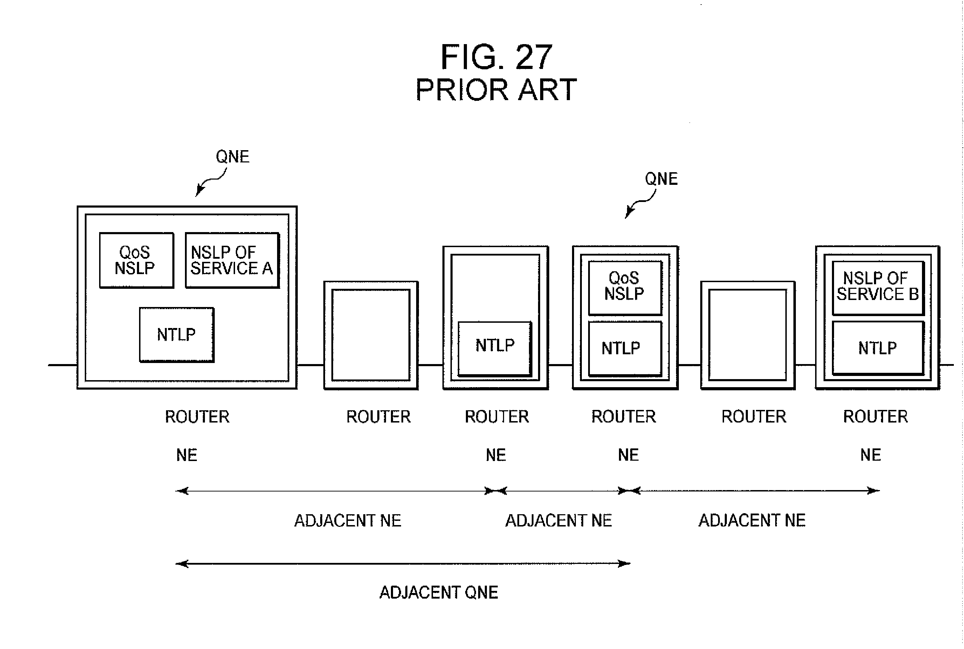

Moreover, Fig. 27 is a schematic diagram for explaining the concept in prior art that a NE (NSIS Entity) and a QNE (QoS NSIS Entity), which are NSIS nodes, are "adjacent to each other". As shown in Fig. 27, at least, the NTLP is mounted to all the nodes (NEs) that have the NSIS function. The NSLP need not always be present on the NTLP, or one or more NSLPs may be present. It should be noted that, in this case, a NE that has a NSLP for a QoS is especially called a QNE. A node that can be an NE is a terminal or a router. Further, a plurality of routers that are not NEs may be present between the adjacent NEs, and a plurality of routers that are not NEs, or a plurality of NEs that do not have a QoS NSLP, may be present between the adjacent QNEs.

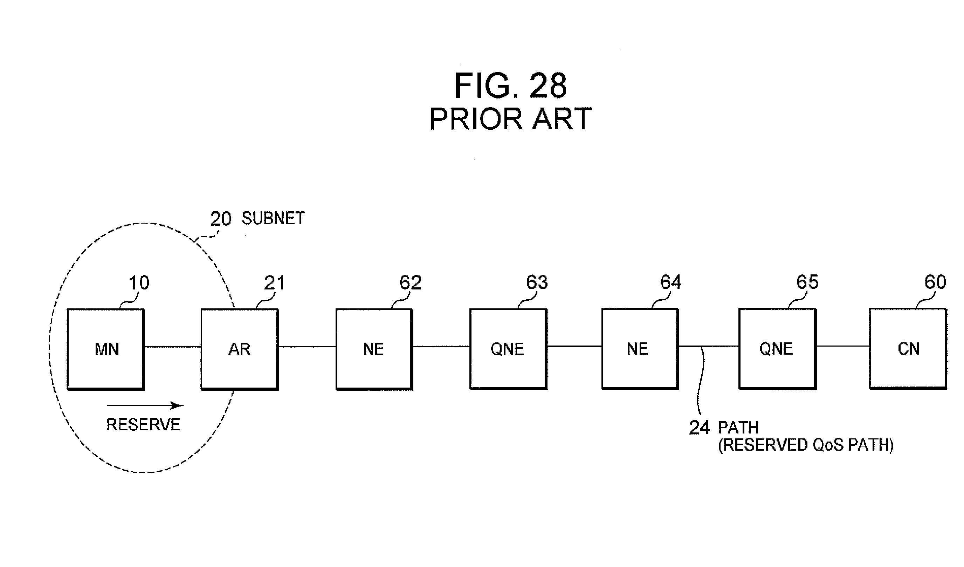

Next, an example of conventional QoS path establishment method (QoS resource reservation) will be described while referring to Fig. 28. Assume that, for a specific purpose (session), the MN 10 connected to the AR 21 via the subnet 20 is going to receive data from the CN 60, or is currently receiving data (reception in progress). In the case of establishing a QoS path, the MN 10 transmits a RESERVE message to the CN 60 to establish a QoS path. The RESERVE message includes desired QoS information (QSpec) for receiving data from the CN 60. The transmitted RESERVE message is reached to a QNE 63 via the AR 21, the NE 62 and the other router that does not have the NSIS function. The NSLP of the QNE 63 reserves, for this session, a QoS resource that is described in the QSpec included in the RESERVE message. The RESERVE message passed through the QNE 63 is further passed through the NE 64 and the other router that does not have the NSIS function, and is reached to a QNE 65. The QNE 65 performs the same process as the QNE 63, and reserves the QoS resource. This operation is repeated, and finally, the RESERVE message is delivered to the CN 60, so that the QoS path is established between the MN 10 and the CN 60.

Further, a flow identifier and a session identifier are employed in order to identify a resource reservation. The flow identifier depends on the CoA of the MN 10 and the IP address of the CN 60, and the QNEs 63 and 65 examine the IP address of the transmission source or transmission destination of each data packet to identify the presence/absence of the resource reservation of the data packet. It should be noted that, in a case wherein the CoA is changed as the MN 10 moves to a different subnet, the flow identifier is also changed in accordance with the change of the CoA of the MN 10. On the other hand, since the session identifier is used to identify a series of data transfer performed for the session, unlike the flow identifier, the session identifier is not changed as the node moves.

Further, a method called QUERY is present to examine the availability of a QoS resource for an arbitrary path. When, for example, a QoS path from the MN 10 to the CN 60 is to be established, this method is employed to examine, in advance, whether a desired QSpec can be reserved at each QNE. A QUERY message is transmitted in order to examine whether a desired QSpec can be reserved at each QNE, and the results can be received as a RESPONSE message that is a reply to the QUERY message. It should be noted that the current resource reservation state is not affected by the QUERY and the RESPONSE messages. Further, a QNE can employ a NOTIFY message to transmit the other QNE a specific notification. This NOTIFY message is employed to transmit, for example, an error notification. All of the RESERVE, QUERY, RESPONSE and NOTIFY messages described above are NSLP messages for a QoS guarantee, and are described in non-patent document 6.

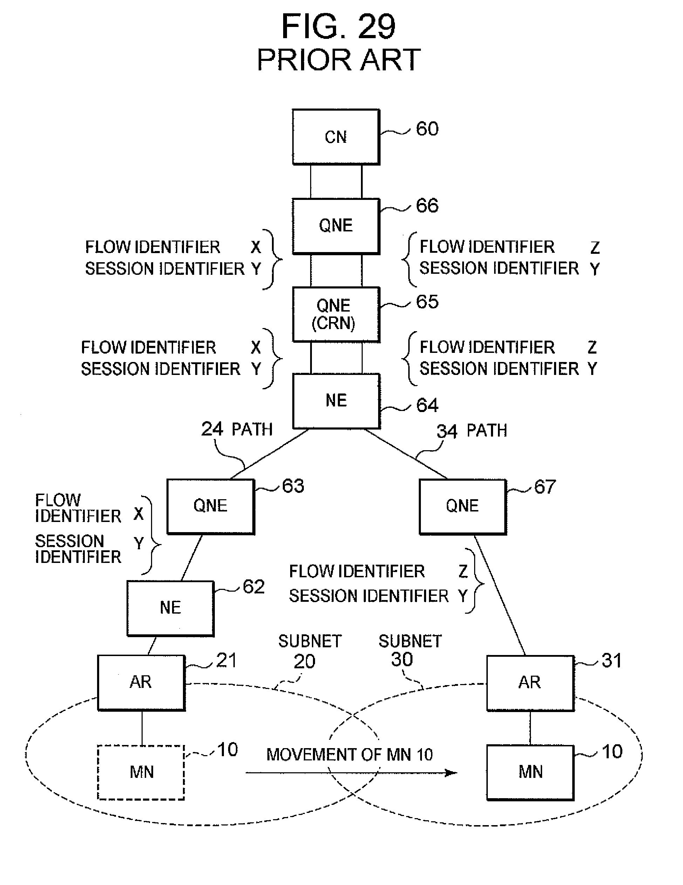

Sequentially, while referring to Fig. 29, an explanation will be given for a double resource reservation avoiding method in prior art when the MN 10 moves from the subnet 20 to the subnet 30. When the MN 10 is currently receiving data from the CN 60, and a QoS path (a path 24) has been established, a QoS resource desired by the MN 10 is reserved at a QNE 63, a QNE 65 and a QNE 66. A flow identifier and a session identifier at this time are defined as X and Y. Actually, previously described, the flow identifier X includes the current IP address of the MN 10 and the IP address of the CN 60, and an arbitrary satisfactorily great numerical value is set to the session identifier Y. In this state, the MN 10 moves to the subnet 30, and then transmits a RESERVE message to the CN 60 in order to establish a new QoS path. It should be noted that the previous path (the path 24) is not released immediately after the MN 10 moves.

As described above, since the flow identifier is changed in accordance with the movement of the MN 10, the flow identifier X for the path 24 differs from the flow identifier for the path 34 (the flow identifier for the path 34 is defined as Z). Since a resource reservation for the session identifier Y is not present for any interface, a QNE 67 determines that a new path is established, and reserves a resource for the flow identifier Z and the session identifier Y. On the other hand, a resource reservation for the session identifier Y is present at the QNE 65 and the QNE 66. Here, the QNE 65 and the QNE 66 employ means for comparing the flow identifiers, identifying that the flow identifier is changed from X to Z, determining that a new path is established in accordance with the movement of the MN 10, and updating an old reservation, without reserving a new resource in order to avoid a double resource reservation. A QNE where merging of the old path and the new path starts is called a CRN (Crossover Node). It should be noted that there is a case wherein the CRN represents a router (the NE 64 in Fig. 29) where merging of the paths actually starts; however, in a case of discussion about a QoS path, the CRN represents a QNE (the QNE 65 in Fig. 29) such that, for the old path (path 24) and the new path (path 34), one of adjacent QNEs (the QNE 66 in Fig. 29) is the same, but the other adjacent QNEs (the QNE 63 and the QNE 67 in Fig. 29) are different.

Further, according to non-patent document 6 or non-patent document 9, for the RESERVE message, the QUERY message and the NOTIFY message, not only the end node (the MN 10 or the CN 60), which is the transmission destination or the transmission source of a data packet, but also an arbitrary QNE can serve as a transmission source of these messages.

It should be noted that the NSIS covers various functions not only in the mobile environment, but also in the common static network. However, in this specification, one of the NSIS functions that provides establishment of a additional service through mobility support is focused on, and it is assumed that establishment of the additional service through mobility support can be provided by mounting the NSIS.
Non-Patent Document 1: D. Johnson, C. Perkins and J. Arkko, "Mobility Support in IPv6", draft-ietf-mobileip-ipv6-24, June 2003
Non-Patent Document 2: Rajeev Koodli "Fast Handovers for Mobile IPv6", draft-ietf-mobileip-fast-mipv6-08, October 2003
Non-Patent Document 3: R. Braden, L. Zhang, S. Berson, S. Herzog and S. Jamin, "Resource Reservation Protocol - Version 1 Functional Specification", RFC 2205, September 1997
Non-Patent Document 4: NSIS WG (http://www.ietf.org/html.charters/nsis-charter.html)
Non-Patent Document 5: H. Chaskar, Ed, "Requirements of a Quality of Service (QoS) Solution for Mobile IP", RFC3583, September 2003
Non-Patent Document 6: Sven Van den Bosch, Georgios Karagiannis and Andrew McDonald "NSLP for Quality-of-Service signalling", draft-ietf-nsis-qos-nslp-01.txt, October 2003
Non-Patent Document 7: X. Fu, H. Schulzrinne, H. Tschofenig, "Mobility issues in Next Step signaling", draft-fu-nsis-mobility-01.txt, October 2003
Non-Patent Document 8: Roland Bless, et. Al., "Mobility and Internet Signaling Protocol", draft-manyfolks-signaling-protocol-mobility-00.txt, January 2004
Non-Patent Document 9: R. Hancock (editor), "Next Steps in Signaling: Framework", draft-ietf-nsis-fw-05.txt, October 2003
Non-Patent Document 10: S. Lee, et al., "Applicability Statement of NSIS Protocols in Mobile Environments", draft-manyfolks-signaling-protocol-01.txt, July 2004
Non-Patent Document 11: M. Brunner (Editor), "Requirements for Signaling Protocols", draft-ietf-nsis-req-09.txt, August 2003

While referring to Fig. 29, assume that, for example, the MN 10, which received a QoS guarantee via the subnet 20 to which the MN 10 was connected before the handover, has performed a handover to the subnet 30 in order to continuously receive, via the subnet 30 to which the MN 10 is to be connected after the handover, the QoS guarantee that was received before the handover.

In this case, a period since the MN 10 performed a handoff relative to the subnet 20, to which the MN 10 was connected before the handover, until the MN 10 is in the state wherein an additional service (a QoS guarantee in this case) is received via the subnet 30, to which the MN 10 is connected after the handover, is a period in which reception of a QoS guarantee is inhibited for the MN 10. Thus, either the MN 10 can not receive a QoS guarantee at all, or a default QoS transfer process is performed, so that the QoS collapse would occur.

Therefore, as described above, the QoS guarantee must be quickly provided for the MN 10 that has performed the handover. In order to resolve this problem, according to the current IETF discussion (e.g., non-patent document 7) related to the NSIS, it is proposed that, for example, before the MN 10 performs the handover, or after the handover is completed, specific preparation is required to establish a new QoS path, or a new QoS path should be established in advance. However, such a proposal is just provided, and no specific method to achieve this proposal is disclosed. Further, it is also required that the previously described CRN should be found as preparation for establishing a new path; however, a specific method for this is not disclosed at all. As described above, finding of a CRN in advance is important for the QoS handover. It should be noted that a CRN must be quickly found in order to avoid or minimize the interrupt by the handover.

In addition, as another problem, assume a case wherein, when a reservation of a QoS resource necessary for the MN 10 to communicate with the CN 60 is present along the path 24, for example, the MN 10 moves to the subnet 30, and performs QUERY for the CN 60. In this case, as described above, since a resource reservation for communication between the MN 10 and the CN 60 along the path 24 is not released for a while after the MN 10 moves, the resource reservation for the communication between the MN 10 and the CN 60 along the path 24 is maintained for a while. This can not be returned as a free resource to the MN 10 (can not be employed as a new path after the MN 10 moves), and as a result, the MN 10 can not obtain accurate free resource information. This problem occurs not only when, after movement, the MN 10 issues a request using a QUERY message, but also when an arbitrary QNE (e.g., the QNE 67) on the path 34 transmits a request using a QUERY message.

### DISCLOSURE OF THE INVENTION

While taking the above problems into account, one objective of the present invention is to provide a crossover node detection method that enables a mobile node that performs a handover to quickly find a CRN, so that, after the handover is completed, the mobile node can still receive quickly and continuously additional service that was received before the handover, and a crossover node detection program that permits a computer to perform this method.

In order to achieve this objective, according to the present invention, there is provided a crossover node detection method, for a communication system wherein a plurality of access routers that form subnets are connected via a communication network, and at least one or more access points that form unique communication enabled areas are connected respectively to the plurality of access routers, for detecting a crossover node at which new and old communication paths on the communication network merge together, and are separated in a case wherein a mobile node, which is so designed as to perform wireless communication with the access points within the communication enabled areas to communicate with the access routers to which the access points are connected, moves, and a connection is changed from an access point that is currently used for communication to a different access point, comprising the steps of:
the mobile node transmitting, to a device that includes past handover history information for the mobile node and other mobile node, a message that includes information required for detecting the crossover node;
the device judging, based on information included in the received message, whether corresponding crossover node information is present in the past handover history information included in the device, and when the information is present, transmitting the crossover node information to the mobile node; and
the mobile node receiving the crossover node information transmitted by the device. With this arrangement, a CRN can be quickly found, so that, after the handover, an additional service received before the handover can be still received quickly and continuously.

Furthermore, as a preferable aspect of the present invention for the crossover node detection method of the present invention, the handover history information includes at least one or more types of information from along information for a subnet used before the mobile node moves, information for a subnet used after the mobile node moves, information for a subnet at a communication destination of the mobile node, information for a crossover node at which new and old communication paths merge together by the movement, information for a link from an access router that forms the subnet used after the movement to the crossover node at which the new and old communication paths merge together, and information for a link from the crossover node at which the new and old communication paths merge together to the access router that forms the subnet used after the movement. With this arrangement, a CRN can be easily found.

Further, as a preferable aspect for the crossover node detection method of the present invention, the information required for detecting the crossover node is at least one or more types of information from among information for a subnet used before the mobile node moves, information for a subnet after the mobile node moves and information for a subnet at a communication destination of the mobile node. With this arrangement, information can be immediately collected.

In addition, as a preferable aspect for the crossover node detection method of the present invention, the device that includes the handover history information is an access router that forms the subnet used after the mobile node moves. With this arrangement, since the access router that forms the subnet after movement knows information for the subject after movement, the information for the subnet used after movement is not required.

Moreover, as a preferable aspect for the crossover node detection method of the present invention, the device that includes the handover history information is an access router that forms the subnet used before the mobile node moves. With this arrangement, since the access router that forms the subnet before movement knows information for the subject before movement, the information for the subnet used before movement is not required.

Also, as a preferable aspect for the crossover node detection method, the device that includes the handover history information is the crossover node at which the new and old communication paths merge together, and are separated. With this arrangement, since the CRN knows the CRN information, the CRN information is not required, and updating is also not necessary.

Further, according to the present invention, there is provided a crossover node detection program that permits a computer to perform a crossover node detection method according to one of the above described inventions. With this arrangement, a CRN can be quickly found, so that, after the movement, an additional service that was received before the handover can be still received quickly and continuously.

Since the above described arrangement is employed for the crossover node detection method of the present invention and the crossover node detection program that permits a computer to perform this method, the frequency for performing the process for finding a CRN is minimized, and a CRN is quickly found. Therefore, the mobile node that performs a handover can quickly and continuously receive, even after the handover, additional service that was received before handover.

### BRIEF DESCRIPTION OF THE DRAWINGS

[Fig. 1] A schematic diagram illustrating the configuration of a communication system according to one embodiment of the present invention.
[Fig. 2] A block diagram illustrating the arrangement of an MN according to the embodiment of the present invention.
[Fig. 3] A schematic diagram illustrating example proxy information stored in the MN according to the embodiment of the present invention.
[Fig. 4] A schematic diagram illustrating example AP-AR correlation information stored in the MN according to the embodiment of the present invention.
[Fig. 5] A block diagram illustrating the arrangement of an AR according to the embodiment of the present invention.
[Fig. 6] A block diagram illustrating the arrangement of another AR according to the embodiment of the present invention.
[Fig. 7] A block diagram illustrating the arrangement of a CRN according to the embodiment of the present invention.
[Fig. 8] A sequence chart showing an example operation, performed by the MN and a device that includes handover history information, from extraction of CRN information until transmission of the information to a proxy.
[Fig. 9] A block diagram illustrating the arrangement of a proxy according to the embodiment of the present invention.
[Fig. 10] A block diagram illustrating the arrangement of a QNE according to the embodiment of the present invention.
[Fig. 11] A block diagram illustrating the arrangement of a CN according to the embodiment of the present invention.
[Fig. 12] A schematic diagram illustrating an example for how information processed by the QNE is stored in a message transmitted and received by a proxy and a CN.
[Fig. 13] A first sequence chart showing an example operation performed by the communication system of the embodiment of the present invention when the MN issues a request to the proxy for preparation of establishment of a QoS path, and the preparation is to be performed.
[Fig. 14] A second sequence chart showing the example operation performed by the communication system of the embodiment of the present invention when the MN issues a request to the proxy for preparation of establishment of a QoS path, and the preparation is to be performed.
[Fig. 15] A sequence chart showing an example operation performed by the communication system of the embodiment of the present invention when the MN issues a request to the proxy for preparation of establishment of a QoS path, and a RESPONSE message used for conventional NSIS is employed as a message employed for the preparation.
[Fig. 16] A sequence chart showing the example operation performed by the communication system of the embodiment of the present invention when the MN issues a request to the proxy for preparation of establishment of a QoS path, and a RESPONSE message used for conventional NSIS is employed as a message employed for the preparation.
[Fig. 17] A block diagram illustrating the arrangement of a proxy that performs another processing method according to the embodiment of the present invention.
[Fig. 18] A block diagram illustrating the arrangement of a CN that performs another processing method according to the embodiment of the present invention.
[Fig. 19] A sequence chart showing an example operation performed by the communication system of the embodiment of the present invention when a proxy issues a request to a CRN for establishment of a QoS path.
[Fig. 20] A sequence chart showing another example operation performed by the communication system of the embodiment of the present invention when a proxy issues a request to a CRN for establishment of a QoS path.
[Fig. 21] A first sequence chart showing an example operation performed by the communication system of the embodiment of the present invention when the MN issues a request to the proxy for preparation of establishment of a QoS path, and the preparation is to be performed.
[Fig. 22] A second sequence chart showing the example operation performed by the communication system of the embodiment of the present invention when the MN issues a request to the proxy for preparation of establishment of a QoS path, and the preparation is to be performed.
[Fig. 23] A sequence chart showing another example operation performed by the communication system of the embodiment of the present invention when the MN issues a request to the proxy for preparation of establishment of a QoS path, and the preparation is to be performed.
[Fig. 24] A schematic diagram showing the configuration of a wireless communication system used in common for the present invention and prior art.
[Fig. 25] A schematic diagram for explaining that the RSVP in prior art can not cope with movement of an MN.
[Fig. 26] A schematic diagram for explaining the NSIS protocol structure in prior art.
[Fig. 27] A schematic diagram for explaining the concept that an NE and a QNE, which are NSIS nodes in prior art, are "adjacent to each other".
[Fig. 28] A schematic diagram illustrating how a QoS resource reservation is made by NSIS in prior art.
[Fig. 29] A schematic diagram for explaining how to avoid a double resource reservation according to the NSIS in prior art.

### BEST MODE FOR CARRYING OUT THE INVENTION

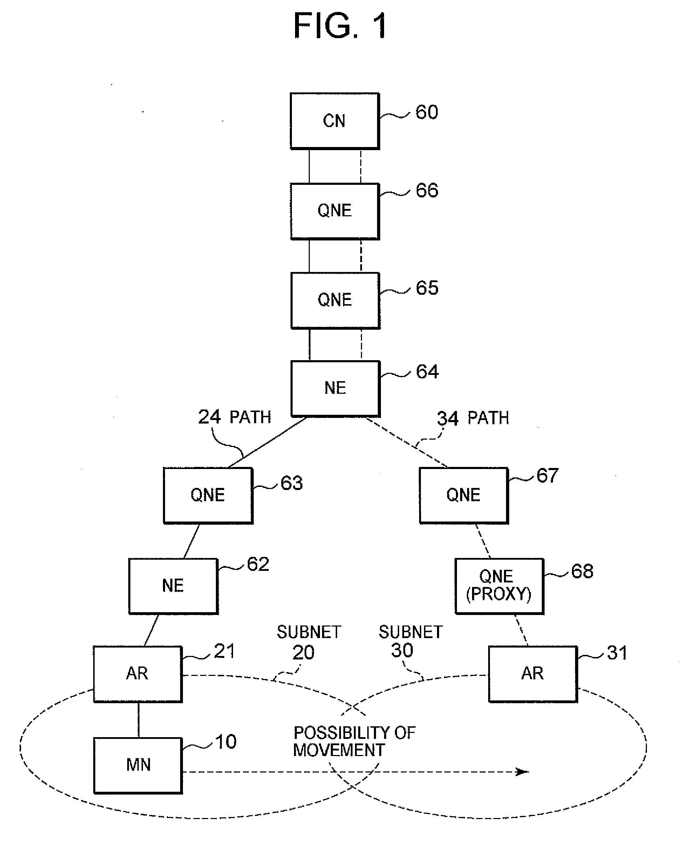

One embodiment of the present invention will now be described by employing Figs. 1 to 23. Fig. 1 is a schematic diagram illustrating the configuration of a communication system according to the embodiment of the present invention. In Fig. 1, a QoS path (a path 24), which is established between a MN 10 and a CN 60 in the state wherein the MN 10 is connected to a subnet 20 before a handover is performed, is indicated by a solid line. On the path 24, an AR 21, a NE 62, a QNE 63, a NE 64, a QNE 65 and a QNE 66 are present from the MN 10 to the CN 60. Similarly, a QoS path (a path 34), which is to be established between the MN 10 and the CN 60 in a case wherein the MN 10 is connected to a subnet 30 after the handover, is indicated by a dotted line. On the path 34, an AR 31, a QNE (a proxy) 68, a QNE 67, the NE 64, the QNE 65 and the QNE 66 are present from the MN 10 to the CN 60. Therefore, a QNE (CRN) at which merging of the old path (path 24) and the new path (path 34) is started is the QNE 65.

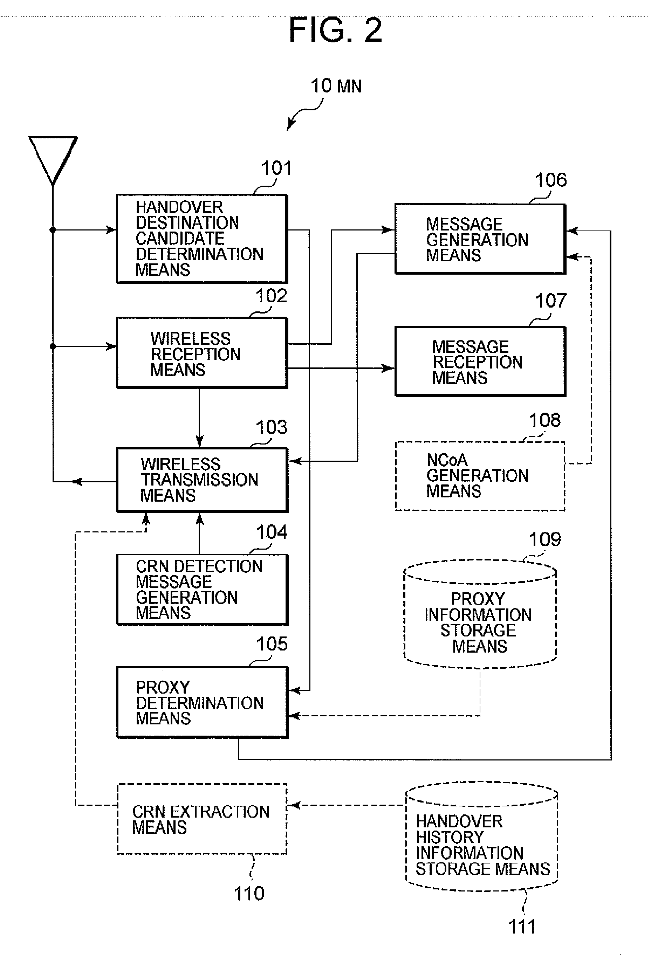

Next, the functions of the MN 10 will be described. Fig. 2 is a block diagram illustrating the arrangement of the MN according to the embodiment of the present invention. It should be noted that, referring to Fig. 2, the individual functions of the MN 10 are illustrated using blocks; these functions can be provided using hardware and/or software.

The MN 10 shown in Fig. 2 includes handover destination candidate determination means 101, wireless reception means 102, wireless transmission means 103, CRN detection message generation means 104, proxy determination means 105, message generation means 106 and message reception means 107. Further, NCoA generation means 108, proxy information storage means 109, CRN extraction means 110 and handover history information storage means 111 may be included as optional means. In Fig. 2, the optional means are indicated by dotted lines. As will be described later, the CRN extraction means 110 and the handover history information storage means 111 are means to be operated when the MN 10 extracts a CRN based on the handover history information included in the MN 10.

The handover destination candidate determination means 101 is means that, for example, receives signals from a plurality of different APs and searches for the list of APs, for which the L2 handover is enabled. It should be noted that the MN 10 can also directly permit the proxy determination means 105 to perform the process that will be described later, without permitting the handover destination candidate determination means 101 to determine a L2 handover destination candidate. Furthermore, the wireless reception means 102 and the wireless transmission means 103 are means that perform data reception and data transmission via wireless communication, respectively, and include various functions required to perform wireless communication.

In addition, the CRN detection message generation means 104 is means for generating a message, including information required for detecting (finding) a CRN (the QNE 65), that is to be transmitted to a device that includes the past handover history information for the MN 10 and the other MN. The handover history information will be described later. Here, information required for detecting a CRN (the QNE 65) is, for example, information for the subnet 20 used before the MN 10 performs a handover, information for the subnet 30 used after the MN 10 performs the handover, or information for the subnet (not shown) of the CN 60 that is a communication destination of the MN 10, and at least one or more these types of information is included in a message as information required for detecting a CRN (the QNE 65). It should be noted that information for a subnet is, for example, information indicating a subnet identifier, etc., and is unique to each subnet. It should be noted that the above described message generated by the CRN detection message generation means 104 is defined as a message X.

Also, the above described wireless transmission means 103 transmits, to the device that includes the handover history information, the message X generated by the CRN detection message generation means 104. And from the device that includes the handover history information and that has received the message X from the wireless transmission means 103, the above described wireless reception means 102 receives correlated information for a CRN (the QNE 65) that is extracted based on the information that is included in the message X and that is required for detecting the CRN (the QNE 65). And the wireless transmission means 103 transmits the received CRN (the QNE 65) information to a proxy (the QNE 68 in Fig. 1) that will be described later, and upon receiving the information, the proxy performs a process for quickly establishing a QoS path when the MN 10 performs a handover. The process for establishing the QoS path will be described later. Further, in a case wherein the device that includes the handover history information has not extracted correlated CRN (QNE 65) information, the wireless reception means 102 may receive, from the device that includes the handover history information, information representing that the information is not extracted. In this case, a CRN is found by using a proxy that is discovered by the proxy determination means 105 that will be described later, and a process for establishing a QoS path is performed.

Here, when the MN 10 transmits, to the device that includes the handover history information, the message X that includes, for example, information for the subnet 20 before the MN 10 performed a handover, information for the subnet 30 after the MN 10 performs a handover and information for the subnet (not shown) of the CN 60 that is a communication destination of the MN 10, the MN 10 must obtain these sets of information. The NSIS Transport Layer Protocol (NTLP or GIMPS) enables the acquisition of these sets of information, and since flow identifier includes the IP addresses of a data transmission source and a reception destination, the NTLP or GIMPS can obtain the above described information. At this time, the MN 10 need to know a prefix length in advance.

Further, the proxy determination means 105 is means for finding a proxy. A proxy discovered by the proxy determination means 105 is a NSIS node (QNE), having a QoS provision function, that serves as a proxy of the MN 10 to perform preparation in advance, so that, without being interrupted, the MN 10 can receive additional service (defined as a QoS in this case) after a handover is performed. The proxy is present on a QoS path that will be established when the MN 10 performs a handover. The function of the proxy will be described later.

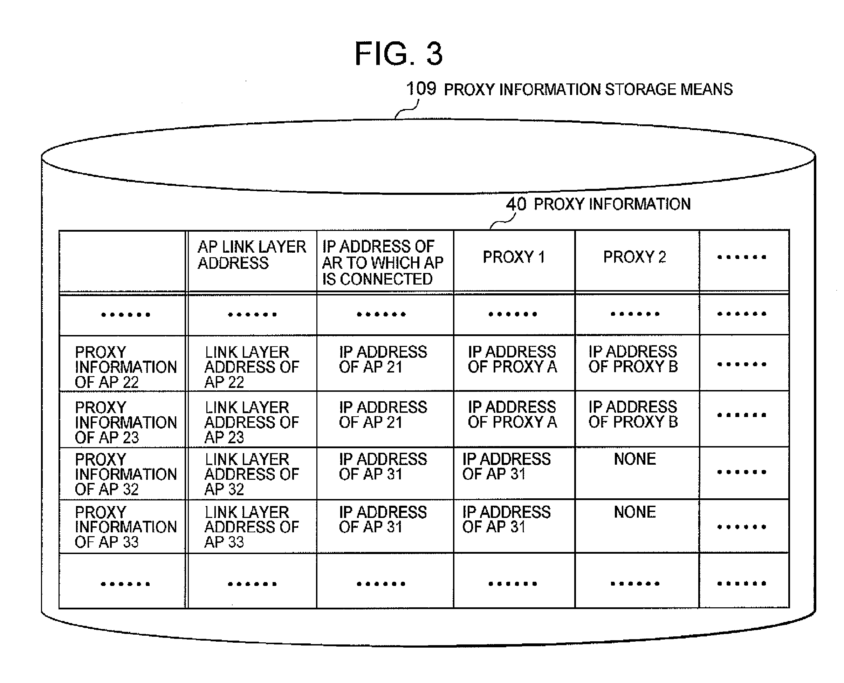

A plurality of methods are proposed in order to find this proxy. For example, there can be: a method whereby, based on information of an AP list obtained by the handover destination candidate determination means 101, the proxy information 40 (proxy information 40 stored in the proxy information storage means 109) that is locally stored in the MN 10 is employed, and appropriate proxy information 40 used for communication with the CN 60 is searched for to determine a proxy on the subnetwork connected to AP; a method whereby this AP list information is transmitted to a server (defined as a proxy search server) present on the IP network, and the above described information related to the most appropriate proxy is received as a reply; or a method for selecting all the proxies that are stored as proxy information 40. It should be noted that there is also a case wherein a handover destination candidate AR is a QNE and serves as a proxy. Example contents of the proxy information 40 are shown in Fig. 3. It should be noted that the proxy information 40 shown in Fig. 3 is an example prepared by referring to the network configuration shown in Fig. 24. The proxy information 40 shown in Fig. 3 includes the IP addresses of nodes that can be selected as proxies for a case wherein the MN is connected to each AP, and the MN can select and designate a proxy by referring to this proxy information 40. It is preferable that a QNE present near the AR that includes the individual APs as subordinates (in the vicinity of the AR in the network configuration) be designated as a proxy.

Moreover, the message generation means 106 is means for generating a message that includes information required to perform preparation on the proxy in advance, so that, without being interrupted, the MN 10 can receive a QoS after the handover is performed. The information required for preparation in advance so that, without being interrupted, the MN 10 can receive a QoS after the handover is performed can be, for example, a flow identifier and a session identifier that are currently employed, information indicating a data transmission direction (a direction from the MN 10 to the CN 60 or a direction from the CN 60 to the MN 10, or bidirectional communication), etc. It should be noted that the above described message generated by the message generation means 106 is defined as a message A. Further, the CRN (QNE 65) information received by the wireless reception means 102 may be included in the message A.

Further, the message reception means 107 is means for receiving, from the proxy, a message (defined as a message D) that includes information indicating whether the above described preparation performed by the proxy is successful. This means 107 can be eliminated depending on a method for establishing a new QoS path. It should be noted that this message D can include, for example, information obtained when the proxy has performed the above described preparation.

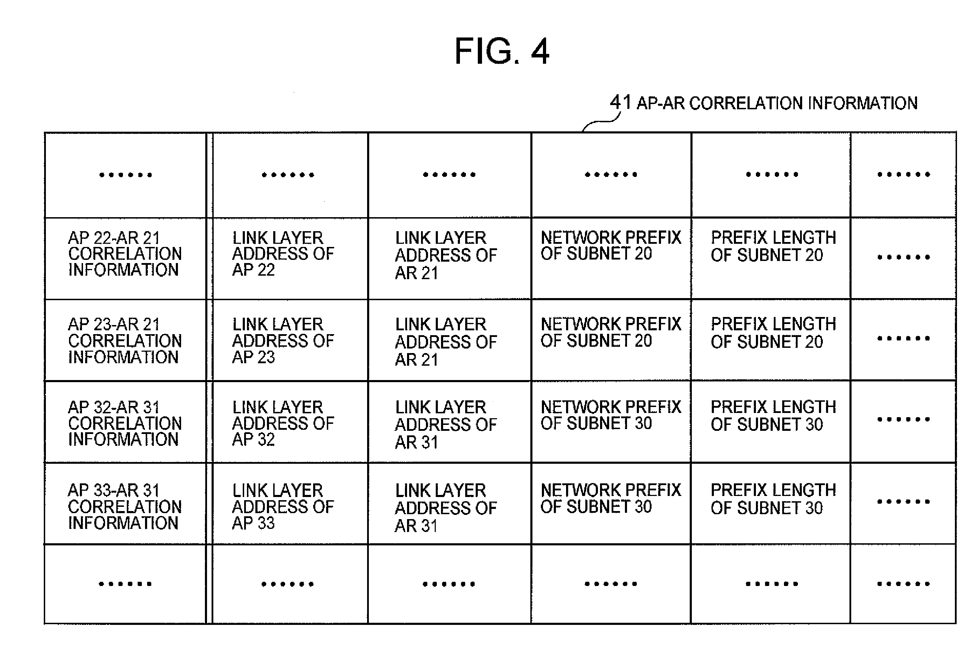

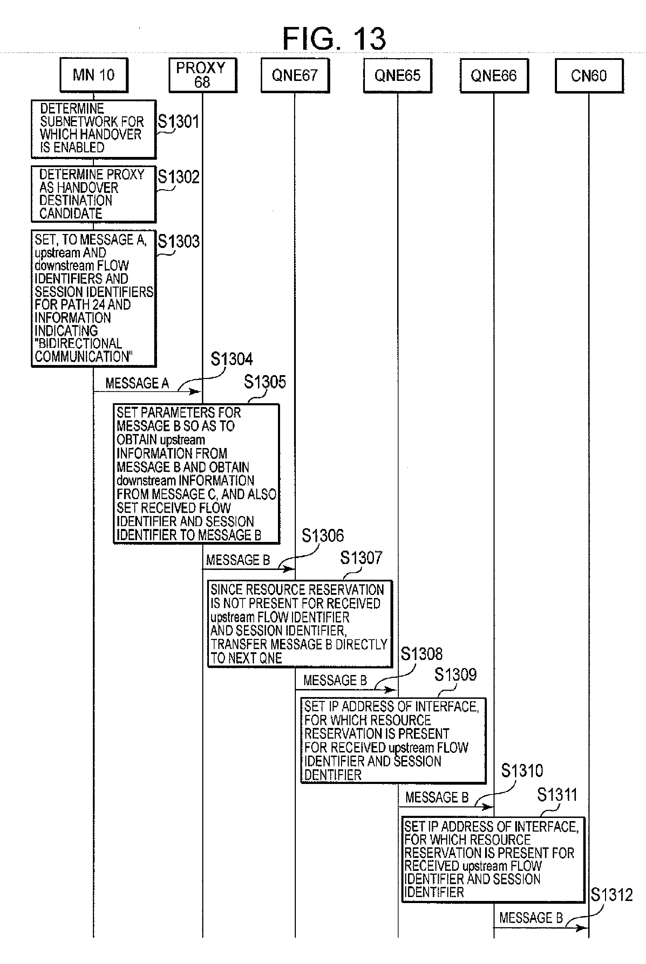

In addition, the MN 10 can also designate a moving destination, generate an NCoA employed at the moving destination, and transmit the NCoA to the proxy at the moving destination. The means for generating this NCoA is the NCoA generation means 108, and the message generation means 106 includes the generated NCoA in the message A together with a flow identifier. As the NCoA generation method, there can be a method whereby, for example, the MN 10 locally includes AP-AR correlation information 41 shown in Fig. 4 (an example prepared by referring to Fig. 13 as well as Fig. 3), and searches the AP-AR correlation information 41 based on AP information obtained by the handover destination candidate determination means 101, and obtains information (e.g., the link layer address of an AR, the network prefix or the prefix length of a subnet to which the AR belongs to, etc.) for an AR to which an AP is connected, so that the NCoA without a state is automatically generated.

However, in this case, since the NCoA is automatically generated without a state, means is required to confirm whether actually this NCoA can be employed for the subnet at the handover destination. Therefore, it is required to perform the processing wherein, for example, a subnet wherein the AR can serve as a proxy is selected as a handover destination, and a message A that includes the NCoA is transmitted to the AR in order to request the AR having the proxy function for examining the appropriateness of the NCoA. Further, as another NCoA acquisition method, a method can also be employed whereby a currently communicating AR (an AR that belongs to the subnet 20 used before the handover) receives, in advance, several of usable CoAs from the DHCP server in the neighbor subnetwork, and before the MN 10 moves to a different AR (an AR that belongs to the subnet 30 used after the handover), one of the CoAs received from the DHCP server of the subnet is allocated to the MN 10. In this case, since a CoA is allocated with a state, the appropriateness for the CoA need not be examined, and unlike the above description, there is no limitation such that an AR having the proxy function should be selected. Furthermore, other information (e.g., information, such as the IP address of the QNE (the QNE 63) currently adjacent to the MN 10) can also be included in the message A.

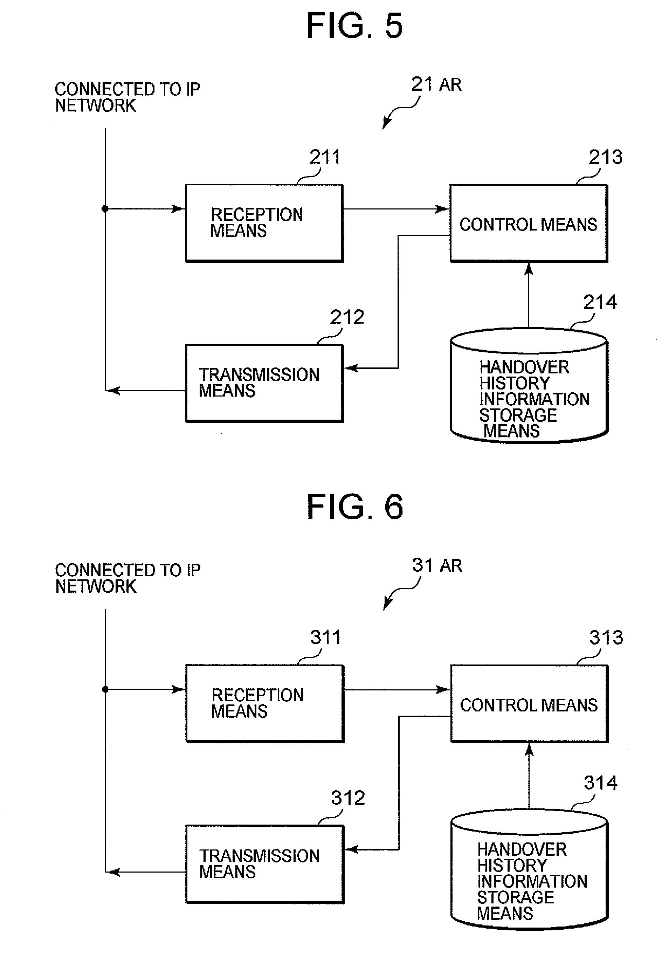

Next, the functions of a device that receives the message X from the MN 10 will now be described. It should be noted that this device is not limited to a specific device, and for example, the AR 21 that forms the subnet 20 used before the handover, the AR 31 that forms the subnet 30 used after the handover, or a CRN (the QNE 65) may also be employed. An explanation will now be given respectively for a case wherein a device that includes handover history information is the AR 21, the AR 31 or the CRN (the QNE 65). An explanation will also be given for a case wherein the MN 10 includes handover history information. Fig. 5 is a block diagram illustrating the arrangement of the AR 21 for the embodiment of this invention that receives the message X. It should be noted that, as well as for the MN 10 shown in Fig. 2, the individual functions of the AR 21 shown in Fig. 5 can be provided using hardware and/or software.

The AR 21 in Fig. 5 includes reception means 211, transmission means 212, control means 213 and handover history information storage means 214. The reception means 211 is means for receiving, for example, a message X transmitted by the MN 10 and data transmitted along the path 24. Furthermore, the transmission means 212 is means for transmitting, for example, the CRN (QNE 65) information extracted by the control means 213 that will be described later and the other data. Based on information, for example, included in the message X that is received by the reception message 211, the control means 213 determines whether correlated CRN information is present in handover history information that is stored in the handover history information storage means 214, and in the case wherein it is determined that the CRN information is present, extracts the CRN information. It should be noted that, while the optimal path is not always established using the extraction results, a QoS is guaranteed. The same thing is applied for the case of the AR 31 and the CRN (the QNE 65) that will be described later. In addition, the handover history information stored in the handover history information storage means 214 is information that is effective, for example, until a predetermined period of time elapses, and may be deleted in a case wherein the predetermined period has elapsed. The same thing is applied for the handover history information for the AR 31 and the CRN (QNE 65) that will be described later.

Assume a case, as a specific example, wherein, when the MN 10 performs a handover from the subnet 20 to the subnet 30, the MN 10 includes, in a message X, information for the subnet 20, information for the subnet 30 and information for the subnet of the CN 60 at a communication destination. It should be noted that, in this case, information for the subnet 20 may not be included in the message X. This is because the AR 21, for example, includes information for the subnet 20. When the reception means 211 receives the message X, the control means 213 determines whether data that consists of, as a set of correlated information, information for the subnet 20, information for the subnet 30 and information for the subnet of the CN 60 at the communication destination, all of which is included in the message X, is present in the handover history information storage means 214, in which information for the subnets before and after the MN performs a handover and for the subnet at a communication destination, CRN information obtained by the handover, information for a link to the CRN from the access router (proxy) that forms the subnet used after the handover and information for a link from the CRN to the access router (proxy) that forms the subnet used after the handover are stored as a set of correlated information. In a case wherein the control means 213 determines that the data is present, the control means 213 extracts corresponding CRN information. And the transmission means 212 transmits the extracted CRN information to the MN 10.

It should be noted that, upon receiving the CRN information, the MN 10 may perform signaling in order to confirm the appropriateness of the received CRN information. Specifically, the MN 10 transmits, to the CRN that is obtained as information, a confirmation message that includes a current flow ID (flow identifier) and a current session ID (session identifier), and when the pertinent IDs are present, it can be confirmed that the pertinent CRN is present on the current old QoS path. However, this is not always optimal. If the pertinent IDs are not present, it is assumed that the CRN is not present on the path, and in this case, the process for finding a CRN is performed using a proxy that is discovered by the proxy determination means 105. The process for confirming the suitableness of the CRN information is performed in the same manner for the case related to the AR 31 and the CRN (QNE 65) that will be described later.

On the other hand, in a case wherein the control means 213 determines that the pertinent data does not exist in the handover history information storage means 214, a CRN must be found using a proxy that is discovered by the proxy determination means 105. It should be noted that, in a case wherein a CRN is found using the proxy that is discovered by the proxy determination means 105, the control means 213 stores, in the handover history information storage means 214, a sets of correlated data that includes not only the CRN information that is found, but also the information for the subnets used before and after the handover, the information for the subnet at the communication destination of the MN 10, the information of a link to the CRN from the access router (proxy) that forms the subnet after the handover and the information of a link from the CRN to the access router (proxy) that forms the subnet used after the handover.

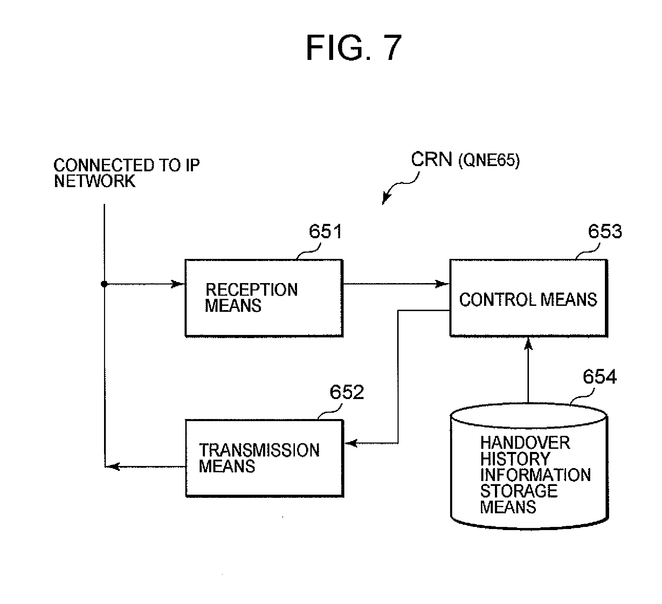

Sequentially, a case wherein the device that includes handover history information is the AR 31 will be described by employing Fig. 6. Fig. 6 is a block diagram illustrating the arrangement of the AR 31 for the embodiment of this invention that receives a message X. It should be noted that, as well as for the MN 10 shown in Fig. 2, the individual functions of the AR 31 in Fig. 6 are provided by using hardware and/or software.

The AR 31 in Fig. 6 includes reception means 311, transmission means 312, control means 313 and handover history information storage means 314. The reception means 311 is means for receiving, for example, a message X transmitted by the MN 10 and data transmitted along the path 34. Further, the transmission means 312 is means for transmitting, for example, the CRN (QNE 65) information extracted by the control means 313 that will be described later and the other data. Based on information, for example, included in the message X received by the reception means 311, the control means 313 determines whether correlated CRN information is present in the handover history information that is stored in the handover history information storage means 314, and in the case wherein it is determined that the CRN information is present, extracts the CRN information.

Assume, as an example, that, when the MN 10 performs a handover from the subnet 20 to the subnet 30, the MN 10 includes, in the message X, information for the subnet 20, information for the subnet 30 and information for the subnet of the CN 60 at a communication destination. It should be noted that, in this case, information for the subnet 30 may not be included in the message X. This is because the AR 31, for example, includes information for the subnet 30. When the reception means 311 includes the message X, the control means 313 determines whether data that employs, as a set of correlated information, information for the subnet 20, information for the subnet 30 and information for the subnet of the CN 60 at a communication destination, all of which is included in the message X, is present in the handover history information storage means 314, in which information for the subnets used before and after the MN performs the handover and for the subnet of a communication destination of the MN, CRN information obtained by the handover, information for a link to the CRN from the access router (proxy) that forms the subnet after the handover, and information for a link from the CRN to the access router (proxy) that forms the subnet after the handover are stored as a set of correlated data. In the case wherein the control means 313 determines that the data is present, the control means 313 extracts the correlated CRN information. And the transmission means 312 transmits the extracted CRN information to the MN 10.

On the other hand, in a case wherein the control means 313 determines that the pertinent data is not present in the handover history information storage means 314, a CRN must be found using the proxy that is discovered by the proxy determination means 105. It should be noted that, in a case wherein the CRN is found using the proxy that is discovered by the proxy determination means 105, the control means 313 as well as the control means 213 of the AR 21 in Fig. 5 stores, in the handover history information storage means 314, a set of correlated data that includes not only the CRN information that is found, but also the information for the subnets used before and after the handover, the information for the subnet of the communication destination of the MN, the information for a link to the CRN from the access router (proxy) that forms the subnet used after the handover and the information for a link from the CRN to the access router (proxy) that forms the subnet used after the handover.

Next, a case wherein the device that includes the handover history information is a CRN (the QNE 65) will be described by employing Fig. 7. Fig. 7 is a block diagram illustrating the arrangement of the CRN (QNE 65) for the embodiment of this invention that receives a message X. It should be noted that, as well as for the MN 10 shown in Fig. 2, the individual functions of the CRN (the QNE 65) in Fig. 7 are provided by using hardware and/or software.

The CRN (the QNE 65) in Fig. 7 includes reception means 651, transmission means 652, control means 653 and handover history information storage means 654. The reception means 651 is means for receiving, for example, a message X transmitted by the MN 10 and data transmitted along the paths 24 and 34. Further, the transmission means 652 is means for transmitting, for example, the CRN (QNE 65) information extracted by the control means 653 that will be described later and the other data. Based on information, for example, included in the message X received by the reception means 651, the control means 653 determines whether correlated CRN information is present in the handover history information that is stored in the handover history information storage means 654, and in the case wherein it is determined that the CRN information is present, extracts the CRN information.

Assume, as an example, that, when the MN 10 performs a handover from the subnet 20 to the subnet 30, the MN 10 includes, in the message X, information for the subnet 20, information for the subnet 30 and information for the subnet of the CN 60 at a communication destination. First, when the MN 10 transmits a message X to the CN 60 on the old QoS path, the QNE present on the QoS path determines whether the pertinent handover history information exists in the QNE, and in a case wherein the information does not exist, transfers the message X to the next QNE. And when the reception means 651 receives the message X, the control means 653 determines whether data that employs, as a set of correlated data, information for the subnet 20, information for the subnet 30 and information for the subnet of the CN 60 at the communication destination, all of which is included in the message X, is present in the handover history information storage means 654, in which the information for the subnets used before the handover, after the handover and at the communication destination of the MN, CRN information obtained by the handover, information for a link to the CRN from the access router (proxy) that forms the subnet used after the handover, and information for a link from the CRN to the access router (proxy) that forms the subnet used after the handover are stored as a set of correlated data. In a case wherein it is determined that the information is present, the control means 653 extracts corresponding CRN information. And the transmission means 652 transmits, to the MN 10, the extracted CRN information, interface information of the QNE 65, etc.

On the other hand, in a case wherein the control means 653 determines that the pertinent data is not present in the handover history information storage means 654, the message X is transferred to the next QNE. And in a case wherein there is not a QNE that includes the pertinent handover history information, the CN 60 notifies the MN 10 that the pertinent CRN is not present. Therefore, the MN 10 must find a CRN using a proxy that is discovered by the proxy determination means 105. It should be noted that, in a case wherein a CRN is found using the proxy that is discovered by the proxy determination means 105, as well as the control means 213 of the AR 21 in Fig. 5 or the control means 313 of the AR 313 in Fig. 6, the pertinent CRN (QNE) control means stores, in the handover history information storage means 654, a set of correlated data that includes not only the CRN information that is found, but also information for the subnets before and after the handover, information for the subnet at the communication destination of the MN, information for a link to the CRN from the access router (proxy) that forms the subnet used after the handover and, information for a link from the CRN to the access router (proxy) that forms the subnet used after the handover.

Sequentially, a case wherein the device that includes the handover history information is the MN 10 will be described by employing Fig. 2. The handover history information is stored in the handover history information storage means 111, and specifically, information for the past handover history of the MN 10 is stored. Based on information that is included in a message X that is generated by the CRN detection message generation means 104, the CRN extraction means 110 determines whether the pertinent handover history information is present in the handover history information storage means 111. In a case wherein the information is present, the CRN extraction means 110 extracts corresponding CRN information. And the wireless transmission means 103 transmits the extracted CRN information to the proxy. On the other hand, in a case wherein it is determined that the information is not present, the process for finding a CRN using the proxy that is discovered by the proxy determination means 105 is begun. For the MN 10 that repeats an activity of a specific pattern by many times, it is effective to employ the past handover history of the MN 10 in this manner. However, for a case wherein the MN 10 includes the handover history information, confirmation of the appropriateness of CRN information is required. Furthermore, handover history information can also be exchanged (shared) with a plurality of MNs.

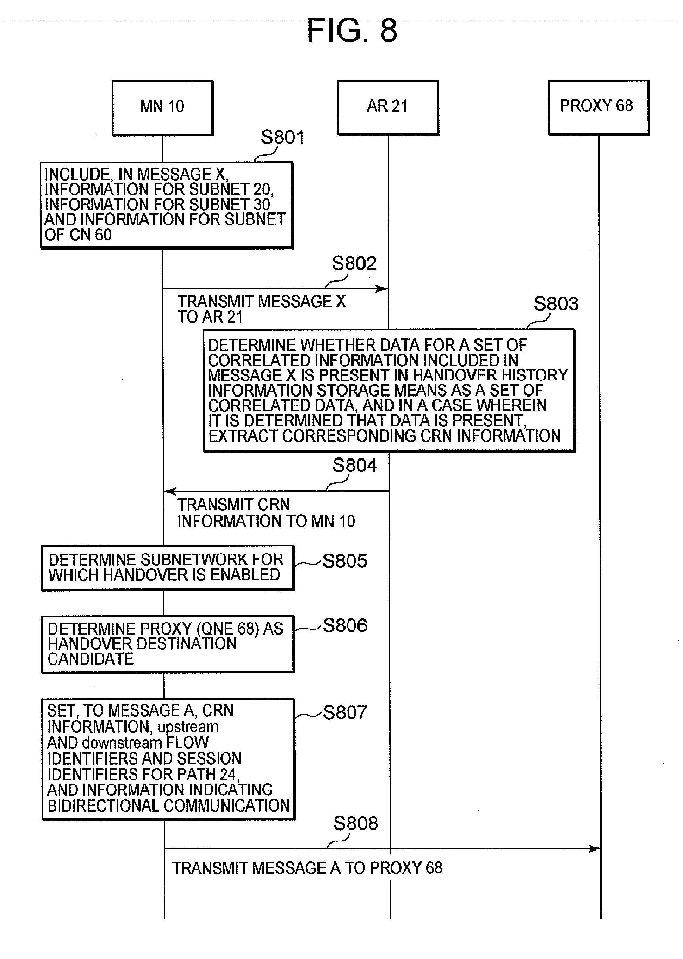

By employing Fig. 8, an explanation will now be given for the processing, performed by the MN 10 and the device (e.g., the AR 21) that includes the handover history information, from extraction of CRN information until transmission to the proxy. When the MN 10 performs a handover from the subnet 20 of the AR 21, to which a AP (not shown) currently used for communication is connected, to an AP (not shown) that is connected to the AR 31 that forms the subnet 30, the MN 10 includes, in a message X, information for the subnet 20, information for the subnet 30 and information for the subnet of the CN 60 in order to detect a CRN (step S801), and transmits the message X to the AR 21 (step S802). It should be noted that the MN 10 may start the processes at steps S801 and S802 after the handover is performed. Upon receiving the message X from the MN 10, the AR 21 determines whether data that employs, as a set of correlated information, information for the subnet 20, information for the subnet 30 and information for the subnet of the CN 60 at the communication destination, all of which is included in the message X, is present in the handover history information storage means 214, in which information for the subnets used before the handover, after the handover and at the communication destination of the MN, CRN information obtained by the handover, information for a link to the CRN from the access router (proxy) that forms the subnet used after the handover, and information for a link from the CRN to the access router (proxy) that forms the subnet used after the handover are stored as a set of correlated data. In a case wherein it is determined that data is present, corresponding CRN information is extracted (step S803). And the AR 21 transmits the extracted CRN information to the MN 10 (step S804).

Then, when the MN 10 receives L2 information from a neighbor AP to which a L2 signal can be reached, first, the MN 10 employs the information to determine a subnetwork for which a handover is enabled (S805), and thereafter, employs the L2 information of the AP to determine a proxy as a handover destination candidate (step S806). After the MN 10 has determined a proxy, the MN 10 designates, to a message A, CRN information from the CRN, an upstream flow identifier, an upstream session identifier, a downstream flow identifier and a downstream flow identifier for the path 24, also designates, to the message A, information indicating that bidirectional communication is to be performed (step S807), and transmits the message A to the selected proxy 68 (step S808). When a CRN is identified in advance like in this case, a RESERVE message can be transmitted to the CRN (the QNE 65). Here, a case wherein the message A is transmitted to the proxy 68 that belongs to a proxy group is especially assumed.

In a case wherein the AR 21 did not extract corresponding CRN information, for example, the AR 21 may transmit, to the MN 10, information indicating corresponding CRN information is not present. Thus, since the MN 10 does not include CRN information in the message A, the proxy is to find a pertinent CRN.

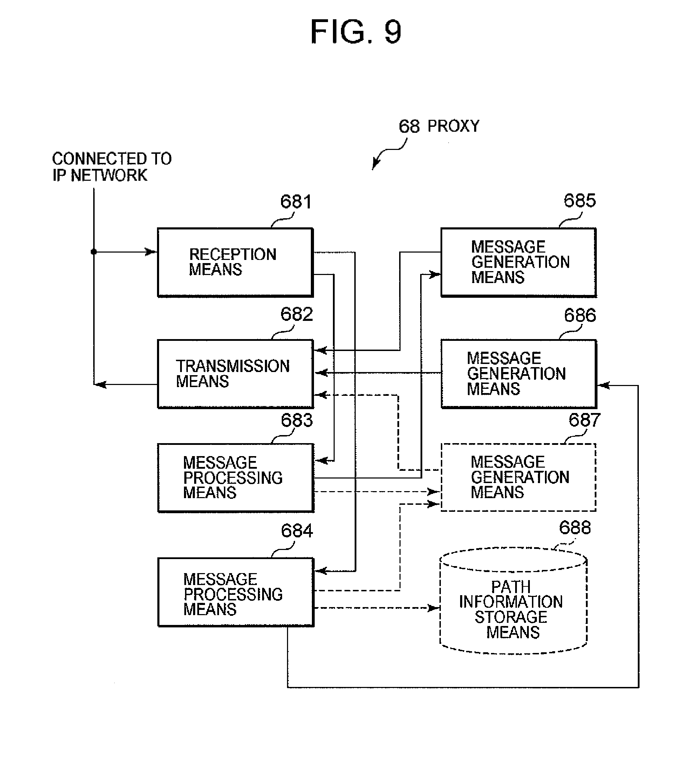

Sequentially, the functions of the proxy (QNE 68) that receives a message from the MN 10 will now be described. Here, assume a case wherein the QNE 68 in Fig. 1 is selected as one proxy by the MN 10. Fig. 9 is a block diagram illustrating the arrangement of a proxy according to the embodiment of the present invention. As well as for the MN 10 in Fig. 2, the individual functions of the proxy 68 in Fig. 9 can be provided using hardware and/or software.

The proxy 68 in Fig. 9 includes reception means 681, transmission means 682, message processing means 683 and 684 and message generation means 685 and 686. Further, message generation means 687 and path information storage means 688 may be included as optional means. It should be noted that optional portions are indicated by dotted lines in Fig. 9.

The reception means 681 and the transmission means 682 are means for performing data reception and data transmission. Further, the message processing means 683 is means for receiving and processing a message (message A) that is generated by the message generation means 106 of the MN 10 in Fig. 2 and transmitted by the wireless transmission means 103. For example, information about the data flow included in the message A is identified, and how a preferable QoS path should be established is determined. Further, in a case wherein CRN information is included in the message A, the message processing means 683 employs this CRN information to perform a process for quickly establishing a QoS path when the MN 10 performs a handover. On the other hand, in a case wherein the message processing means 683 does not receive CRN information from the MN 10, a CRN is discovered by the message generation means 685 and the message processing means 684 that will be described later, and based on this CRN information, a process is performed to quickly establish a QoS path when the MN 10 performs a handover. A processing method for establishing a QoS path will be described later. It should be noted that, for performing bidirectional communication, the received CRN information is both upstream CRN information and downstream CRN information as will be described later. Further, the change of the QoS path establishment method due to the data flow will be described together with the intermediate QNE function that will be described later.

Furthermore, the message generation means 685 generates a message (defined as a message B) that includes a flow identifier (e.g., a flow identifier X for the path 24) and a session identifier (e.g., a session identifier Y used in common for the path 24 and the path 34), which are received by the message processing means 683. The message B generated by the message generation means 685 is a message used for discovering a CRN, and is transmitted to the CN 60 via the transmission means 682. It should be noted that IP address information for the CN 60 is included in the flow identifier.

In addition, the message processing means 684 is means for receiving and processing a message (defined as a message C) that is transmitted via the individual QNEs on the path 34 from the CN 60 that has received the message B generated by the message generation means 685. This message C includes CRN information. Based on the CRN information, the message processing means 684 performs a process for quickly establishing a QoS path when the MN 10 performs a handover. A plurality of methods are available for performing this process. For example, this information may be transmitted to the path information storage means 688, and a specific process may be performed at the time where the MN 10 performs a handover, or the information may be further transmitted to the message generation means 686 to be regarded as a reply message (the above described message D) to the MN 10. However, in this case, the message reception means 107 in Fig. 2 must be provided for the MN 10. Further, as previously described, information indicating that preparation is successful may be included in the message D. In addition, other information may also be included in the message D. Moreover, in a case wherein CRN information is received from the MN 10, a reply message to the MN 10 need not be transmitted.

Furthermore, in a case wherein the message processing means 683 has received NCoA information for the MN 10, the message generation means 687 may generate a new flow identifier based on this NCoA, and may transmit a RESERVE message to the CN 60 based on the CRN information that is received by the message processing means 683 or the message processing means 684, and a new QoS path may be generated on the path 34. It should be noted that another function is required for this case, e.g., CRN information should be included in the RESERVE message, and a double reservation should be avoided for resources between the pertinent CRN and the CN 60. It should be noted that QSpec information, etc., which is required for establishing a QoS path and which should be included in the RESERVE message, can be obtained from this CRN by referring to, for example, the CRN information that is received by the message processing means 683, or the CRN information that is included in the message C.

In addition, in a case wherein information for the QNE (the QNE 63) currently adjacent to the MN 10 is included in the message A, the information can also be obtained from the QNE 63. Further, in a case wherein checking of appropriateness is required for the NCoA that is transmitted in the above described manner, the checking must be performed. In a case wherein the proxy does not include a NCoA appropriateness checking function, or in a case wherein the NCoA is not appropriate as the result of the appropriateness checking, an error message, for example, must be returned to the MN 10 as an error notification. This error notification can be included in the message D, or can be returned as another message (e.g., an FMIP FBAck message). Moreover, the message B generated by the message generation means 685 can include other information (e.g., the NCoA that is confirmed as appropriate, information, included in the message A, about the QNE (the QNE 63) currently adjacent to the MN 10, or the like.)

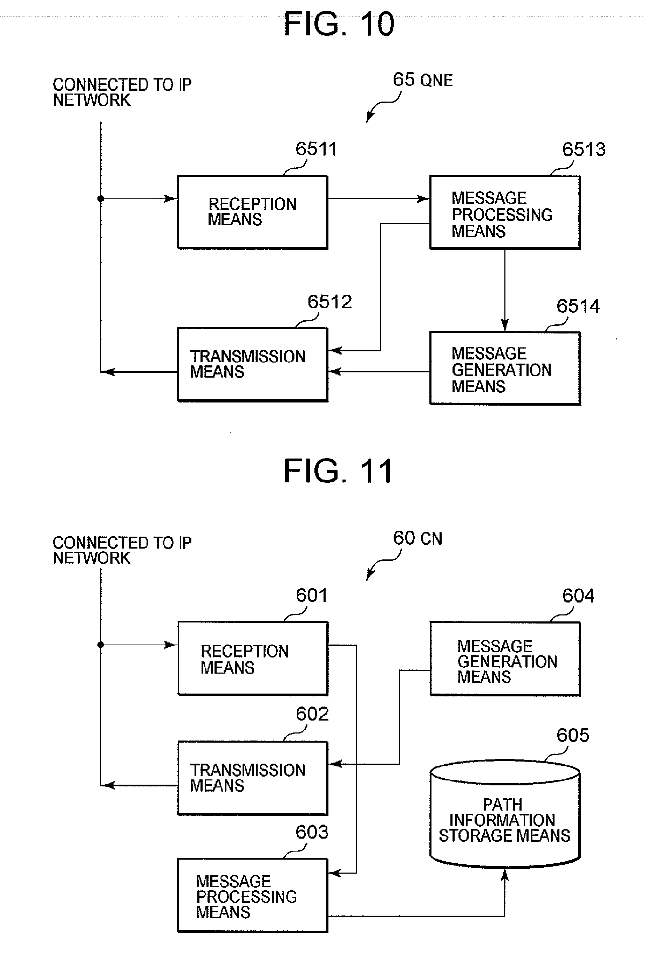

The functions of the intermediate QNE on the path 34 will now be described by employing the QNE 65 as an example. Fig. 10 is a block diagram illustrating the arrangement of the intermediate QNE on the path 34 according to the embodiment of the present invention. It should be noted that, as well as for the MN 10 in Fig. 2, the individual functions of the QNE 65 in Fig. 10 can be provided using hardware and/or software. Further, in a case wherein, as in Fig. 7, the QNE 65 is a device that includes the handover history information, the arrangement including the control means 653 and the handover history information storage means 654 is employed.

The QNE 65 shown in Fig. 10 includes reception means 6511, transmission means 6512, message processing means 6513 and message generation means 6514. The reception means 6511 and the transmission means 6512 have the same functions as the reception means 681 and the transmission means 682 of the proxy 68 in Fig. 9. Further, the message processing means 6513 is means that, upon receiving the message B or the message C described above, determines whether a resource reservation for a pair of a flow identifier and a session identifier included in this message is already present in the QNE 65. In a case wherein a reservation is absent, the message B or the message C is transferred to the QNE via the transmission means 6512, without any process being performed by the message generation means 6514. On the other hand, in a case wherein a reservation is present, the IP address of the interface is stored in the same message by the message generation means 6514, and a new message generated by the message generation means 6514 is transmitted to the next QNE by the transmission means 6512. However, in a case wherein the message B or the message C is a message that requests the QNE for a specific process, e.g., a QUERY message or the extension of a RESPONSE message relative to this message, a process unique to these messages is performed.

The use of either the message B or the message C to perform the above described process is varied in accordance with a data flow direction and the other NSIS function. As an example, in a case wherein the data flows only in a direction from the CN 60 to the MN 10, in accordance with the idea of the RSVP (see non-patent document 3) QoS path establishing method, it is appropriate that the above process should be performed upon receiving the message C transmitted by the CN 60.

Since there is also a case wherein the path for data and signaling differs between the direction from the MN 10 to the CN 60 (defined as upstream) and the direction from the CN 60 to the MN 10 (defined as downstream), actually, there is a probability that the message C will be transmitted along the path 34 (the path 34 can be established), while the message B will not be passed along the path 34. Therefore, it is possible that the individual QNEs on the path 34 receive only either one of the message B and the message C.

On the other hand, in a case wherein the same idea is employed, and in a case of an upstream data flow, the path 34 is established based on the message B, and a process is performed by the message processing means 6513 and the message generation means 6514 described above. In this case, the message C can be a message used only for returning, to the proxy 68, the processing results obtained by the individual QNEs upon receiving the message B. However, the idea of the RSVP path establishing method is not always applied for the NSIS because the NTLP function is utilized. For example, relative to a downstream data flow, the message B can also be passed along the path 34 to collect necessary information.

The functions of the CN 60 will now be described. Fig. 11 is a block diagram illustrating the arrangement of the CN according to the embodiment of the present invention. It should be noted that, as well as for the MN 10 in Fig. 2, the individual functions of the CN 60 in Fig. 11 can be provided using hardware and/or software.

The CN 60 in Fig. 11 includes reception means 601, transmission means 602, message processing means 603, message generation means 604 and path information storage means 605. The reception means 601 and the transmission means 602 have the same functions as the reception means 681 and the transmission means 682 of the proxy 68 in Fig. 9, or the reception means 6511 and the transmission means 6512 shown in Fig. 10. Further, the message processing means 603 has a function for receiving and processing a message B. For example, the message processing means 603 determines whether the message B is issued upstream or downstream. Further, in a case wherein upstream CRN information is included in the message B, the message processing means 603 can transmit the CRN information to the path information storage means 605 to store this information. When NCoA information for the MN 10 is obtained, the CN 60 can employ the information stored in the path information storage means 605, and perform a QoS path establishing process using RESERVE message.

It should be noted that, in a case wherein the NCoA information for the MN 10 is included in the message B, the NCoA information can be obtained at the same time as the reception of the message B, or can be obtained from a BU message received from the MN 10. Further, as described above, QSpec information, etc., that should be included in the RESERVE message can be obtained from a CRN, or can be obtained from the QNE 63 in a case wherein the message B includes the IP address of the QNE 63. Further, the message generation means 604 is means for generating the message C and transmitting the message C via the transmission means 602. It should be noted that, in a case wherein path information (which QNE holds a resource reservation) is included in the message B, this information may also be included in the message C to be transmitted. Further, the message C may include other information.

Next, an explanation will be given for how the CN 60 or the proxy 68 can obtain CRN information through transmission and reception of the message B and the message C. Assume that the MN 10 and the CN 60 are currently performing bidirectional communication using, for example, the IP telephony. In this case, there are both an upstream data flow and a downstream data flow, and since data is not always passed along the same path (same router) bidirectionally, accordingly, it is assumed that CRNs differ between the upstream side and the downstream side. Here, it is assumed that, while referring to Fig. 1, data is bidirectionally passed along the same path. However, also for a case wherein data is passed along different paths bidirectionally, the same method as will be described later can be employed to determine CRNs for the bidirectional communication. It should be noted that, in the case of bidirectional communication, a flow identifier and a session identifier are present for a communication path in each direction, and the proxy simply receives, from the MN 10, pairs of flow identifiers and session identifiers for two directions, and embeds them in a message B to be transmitted to the CN 60.

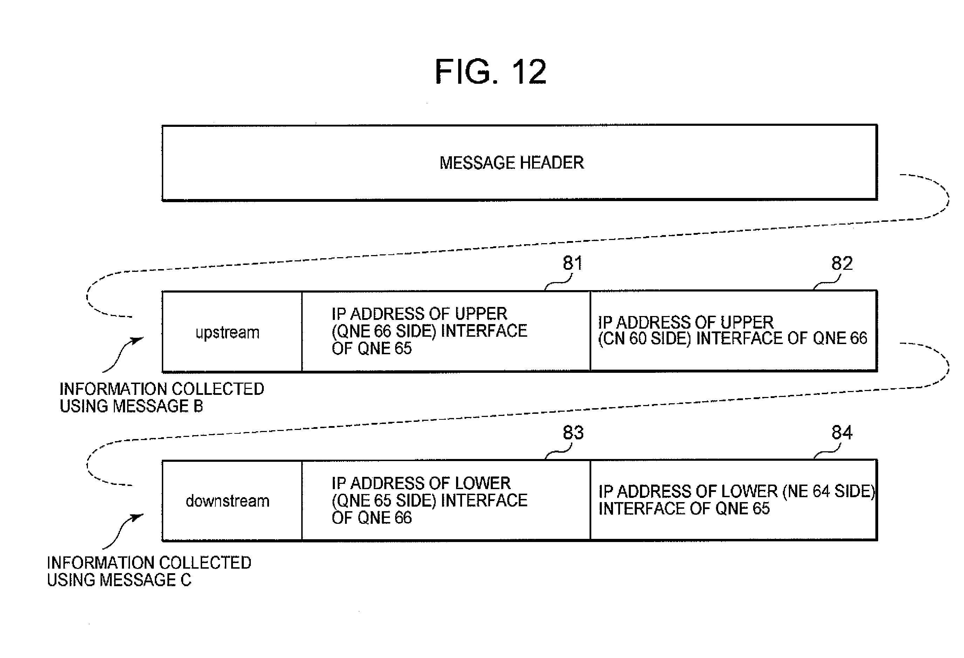

Example information that the proxy can obtain through transmission and reception of the message B and the message C is shown in Fig. 12. Each time data is passed through the QNE that has a resource reservation relative to a pair of a flow identifier and a session identifier that are included in the message B or the message C, IP address information for an interface that has the resource reservation is added to the end of the message. For example, in a case of the message B, the IP address (information 81: the IP address of the upper (QNE 66 side) interface of the QNE 65) of an interface, for which a resource reservation is present relative to the flow identifier and the session identifier for the upstream, is added to the message B when it is passed through the QNE 65. When the message B is passed through the QNE 66, the IP address (information 82: the IP address of the upper (CN 60 side) interface of the QNE 66) of the interface of the QNE 66, for which a resource reservation is present relative to the upstream flow identifier and the session identifier, is added to the end of the resultant message. Based on this mechanism, in a case wherein the information is returned to the CN 60 or the proxy 68, the CN 60 or the proxy 68 can determine that a QNE that has the IP address (the IP address of the information 81) of the interface first provided is the upstream CRN.

Further, since the order is reverse for the downstream, the proxy 68 can determine that, among information 83 and information 84, a QNE that has the IP address (the IP address of the information 84) of the interface last provided is a downstream CRN. It should be noted that there is a possibility that a QoS path is changed due to the state of a network, and a CRN is also changed in accordance with the change of the QoS path. In order to cope with the possibility of the change of the CRN, the effective period for CRN information stored in the CN 60 or the proxy 68 may be designated, and before the effective period expires, whether or not the CRN is changed may be examined, or the latest CRN information may be obtained in order to hold the accurate CRN information. It should be noted that the effective period may be designated by the CRN 60 or the proxy 68 that receives the CRN information, or when the message A is to be transmitted, the MN 10 may notify the CN 60 or the proxy 68 of the effective period.

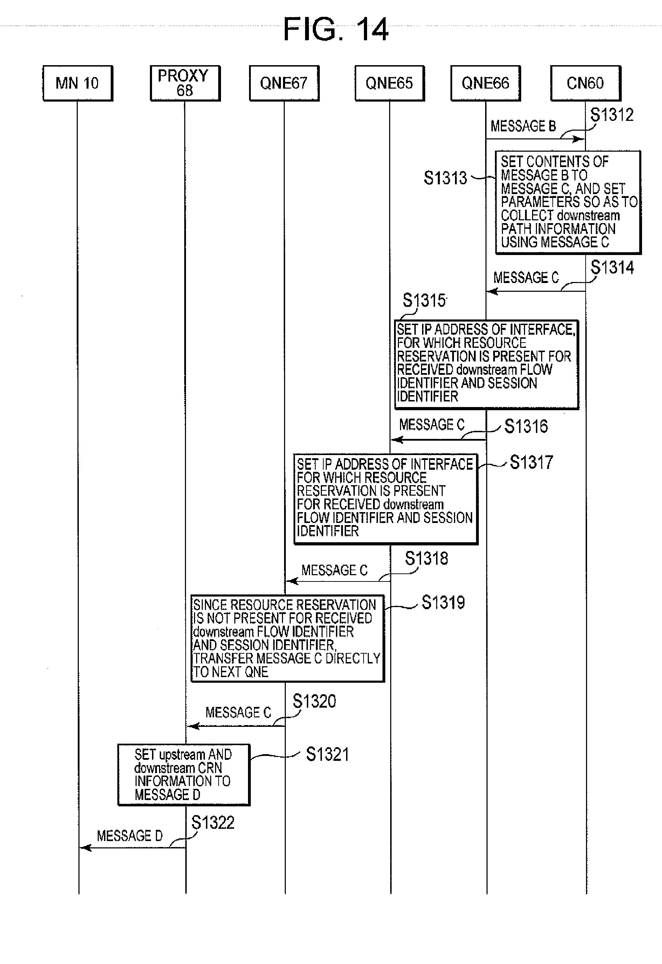

Next, an explanation will be given for the operation performed wherein, in a case wherein CRN information can not be included in the message A, the MN 10 issues a request to the proxy 68 for the preparation of establishing a QoS path, and the preparation is to be performed. In Figs. 13 and 14, sequence charts for the embodiment of this invention are shown for an example operation in which the MN 10 transmits information for identifiers (a flow identifier and a session identifier) to the proxy 68, and the proxy 68 and the CN 60 exchange messages via the intermediate QNEs 65 to 67 so as to find upstream and downstream CRNs. It should be noted that the sequence charts shown in Figs. 13 and 14 are provided for a case wherein, in the network system shown in Fig. 1, the MN 10 selects the proxy 68 as one of proxies. In this case, the proxy 68 obtains CRN information, and thereafter, returns this information to the MN 10. Further, the operation sequence is shown in the sequence charts in Figs. 13 and 14, and the same process at step S1312 is employed in the sequence charts in Figs. 13 and 14.

When the MN 10 receives L2 information from the neighbor AP to which a L2 signal can be reached, first, the MN 10 employs this information to determine a subnetwork for which a handover is enabled (step S1301), and thereafter, employs the L2 information of the AP to determine a proxy as a handover destination candidate (step S1302). After the proxy is determined, the MN 10 designates, to the message A, an upstream flow identifier, an upstream session identifier, a downstream flow identifier and a downstream session identifier for the path 24, also designates, to the message A, information indicating bidirectional communication (step S1303), and transmits the message A to a selected proxy group (a plurality of proxies) (step S1304). Here, an explanation will be especially given for the processing performed after the message A is transmitted to the proxy 68 that is a proxy in the proxy group.

The proxy 68 generates a message B based on information of the message A received from the MN 10. Since bidirectional communication is assumed here, parameters are designated, so that, via a router, upstream information can be obtained from the message B and downstream information can be obtained from a reply message (message C). Further, the flow identifier and the session identifier transmitted using the message A are designated to the message B (step S1305), and the message B is transmitted to the CN 60 (step S1306). It should be noted that, at this time, the proxy 68 should obtain the address of the CN 60 based on the information for the flow identifier.

The individual QNEs 65 to 67 located on the path from the proxy 68 to the CN 60 examine the contents of the message B, and examine whether the resource reservation is present in their QNEs relative to the upstream flow identifier and the upstream session identifier that are included. In a case wherein a resource reservation for the upstream flow identifier and the upstream session identifier are present, each QNE adds, to the message B, the IP address of the interface for which the resource reservation is present, and transmits the message B to the CN 60. On the other hand, in a case wherein a resource reservation for the upstream flow identifier and the upstream session identifier is not present, the message B is transferred unchanged, without information being added.

It should be noted that, since a resource reservation for the upstream flow identifier and the session identifier is not present at the QNE 67, the message B is transferred unchanged, without information being added (steps S1307 and 1308). Further, since a resource reservation for the upstream flow identifier and the upstream session identifier is present at the QNE 65, the IP address of the interface, for which the resource reservation is present, is added to the message B (step S1309), and the message B is transferred (step S1310). Furthermore, since a resource reservation for the upstream flow identifier and the upstream session identifier is present at the QNE 66 as well as the QNE 65, the IP address of the interface, for which the resource reservation is present, is added to the message B (step S1311), and the message B is transferred (step S1312).

And finally, the message B is reached to the CN 60, and upon receiving the message B, the CN 60 designates, to the message C, the information (information added to the message B by the individual QNEs 65 to 67) added by the individual QNEs 65 to 67, sets parameters so as to collect information on the downstream path using the message C (step S1313), and transmits the message C to the proxy 68 (step S1314). In addition, the individual QNEs 65 to 67 located on the path from the CN 60 to the proxy 68 perform, for the downstream message C, the same process as performed for the message B.

Specifically, since a resource reservation for the downstream flow identifier and the downstream session identifier is present at the QNE 66, the IP address of the interface for which the resource reservation is present is added to the message C (step S1315), and the message C is transferred (step S1316). Further, since a resource reservation for the downstream flow identifier and the downstream session identifier is present at the QNE 65 as well as the QNE 66, the IP address of the interface for which the resource reservation is present is added to the message C (step S1317), and the message C is transferred (step S1318). In addition, since a resource reservation for the downstream flow identifier and the downstream session identifier is not present at the QNE 67, the message C is transferred unchanged, without information being added (steps S1319 and 1320).

Since the proxy 68 that receives the message C in this manner can specify upstream and downstream CRN information by referring to the message C, the proxy 68 designates the upstream and downstream CRN information to the message D (step S1321), and transmits the message D to the MN 10 (step S1322).

As described above while referring to the functions of the MN 10, various means can be employed, other than means whereby the proxy 68 collects CRN information and transmits the CRN information to the MN 10. Further, when the MN 10 obtains CRN information at an early stage, for example, the MN 10 that moves between the subnets can transmit a RESERVE message that include the CRN information in order to make a resource reservation. Further, in a case wherein the pertinent CRN receives a RESERVE message that includes CRN information, the CRN can perform a process to avoid a double reservation for the resources up to the CN 60. For example, the pertinent CRN can perform a process for updating an old reservation, instead of making a new reservation for a resource.

When the CRN is specified in advance in this manner, unlike in the prior art, searching for the CRN need not be performed in order to make a resource reservation after the MN 10 has performed the handover, so that a QoS path can be quickly established. Further, as described above, it is also possible that the proxy 68 that has obtained the CRN information makes a resource reservation in advance, without returning information to the MN 10. Thus, a QoS path can be established more quickly.

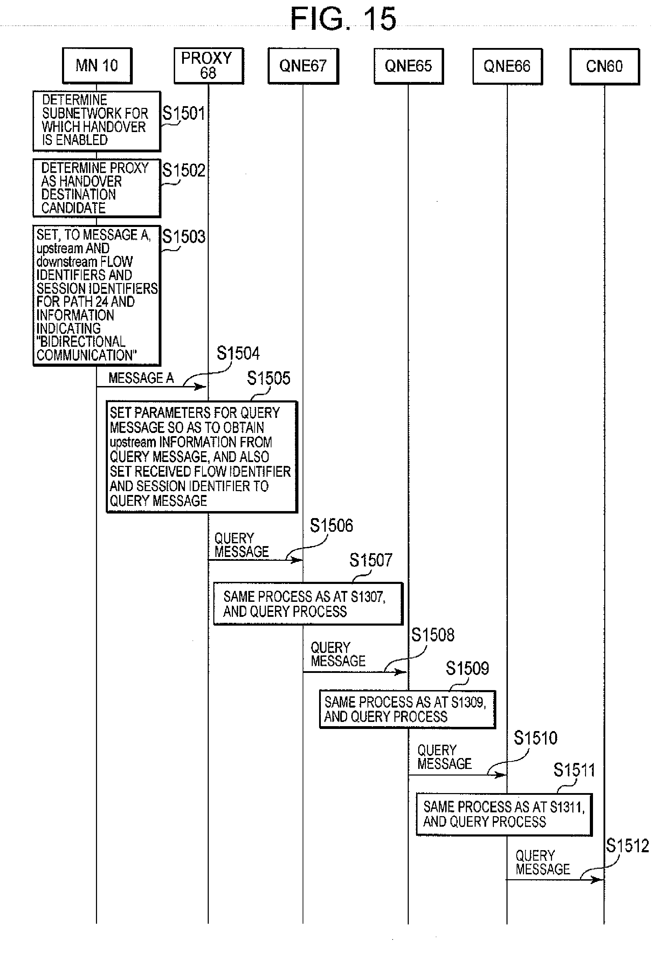

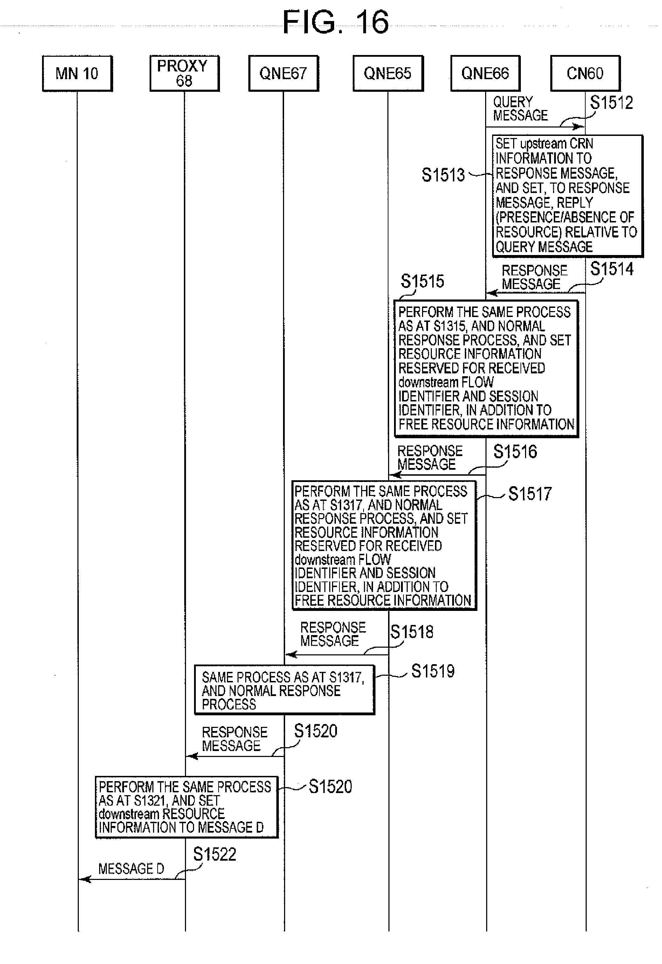

Further, as described above, the message B or the message C can be rewritten as a conventional message, such as a QUERY message, a RESPONSE message or a NOTIFY message. In Figs. 15 and 16, the sequence charts are shown for a case wherein the function of the message B is provided for the QUERY message, and the function of the message C is provided for the RESPONSE message. Here, a message to be exchanged includes not only the function for finding upstream and downstream CRNs, but also the functions (e.g., a function for obtaining free resource information) originally provided for the QUERY and RESPONSE messages. It should be noted that steps S1501 to S1522 in Figs. 15 and 16 correspond to steps S1301 to S1322 in Figs. 13 and 14, the QUERY message corresponds to the message C, and the RESPONSE message corresponds to the message D.

As described above, in a case of using the conventional QUERY and RESPONSE messages, since the mobile node, such as the MN 10, does not have any means for obtaining information about a resource that is reserved for current communication performed with the correspondent node, it can not be determined that resource information reserved for the current communication between the CRN and the CN 60 is resource information that can be employed at the arrival of the MN 10. However, since the QUERY and the RESPONSE messages include the current flow identifier and the current session identifier of the MN 10, it can be determined that resource information reserved for the current communication is resource information that can be employed at the arrival of the MN 10.

It should be noted that, according to non-patent document 6, free resource information is obtained only through the RESPONSE message. That is, as shown in Figs. 15 and 16, in a case wherein the proxy 68 transmits the QUERY message to the CN 60, and the CN 60 transmits the RESPONSE message to the proxy 68, there is a probability that only downstream free resource information will be obtained. Therefore, in a case wherein bidirectional free resource information is necessary, it may be required that, when the CN 60 receives the QUERY message from the proxy 68, the CN 60 should transmit the RESPONSE message to the MN 10, and at the same time, transmit another QUERY message to the proxy 68. Furthermore, by also employing the other NSIS function together, bidirectional free resource information might be obtained by one transmission/reception of the QUERY and RESPONSE messages.

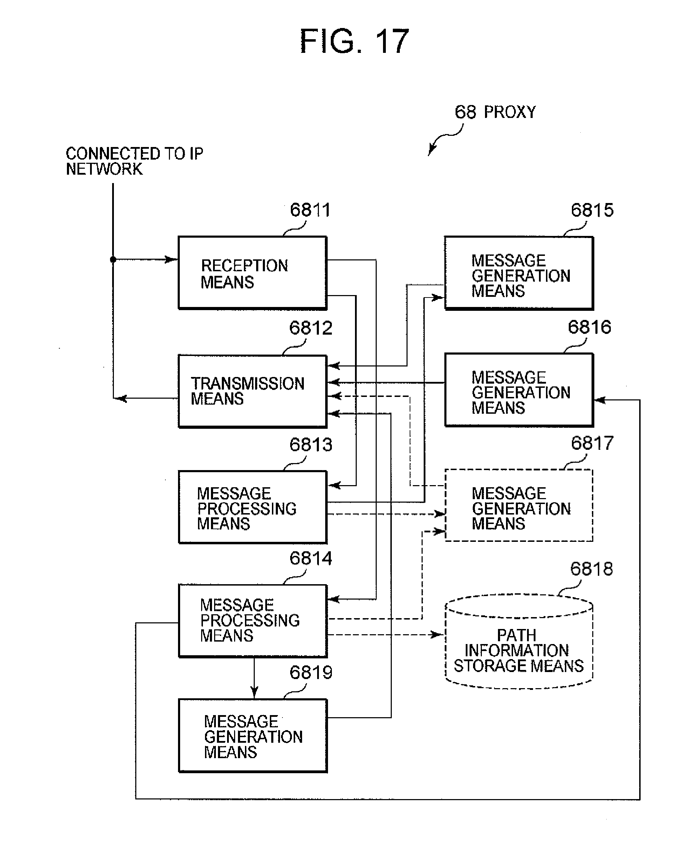

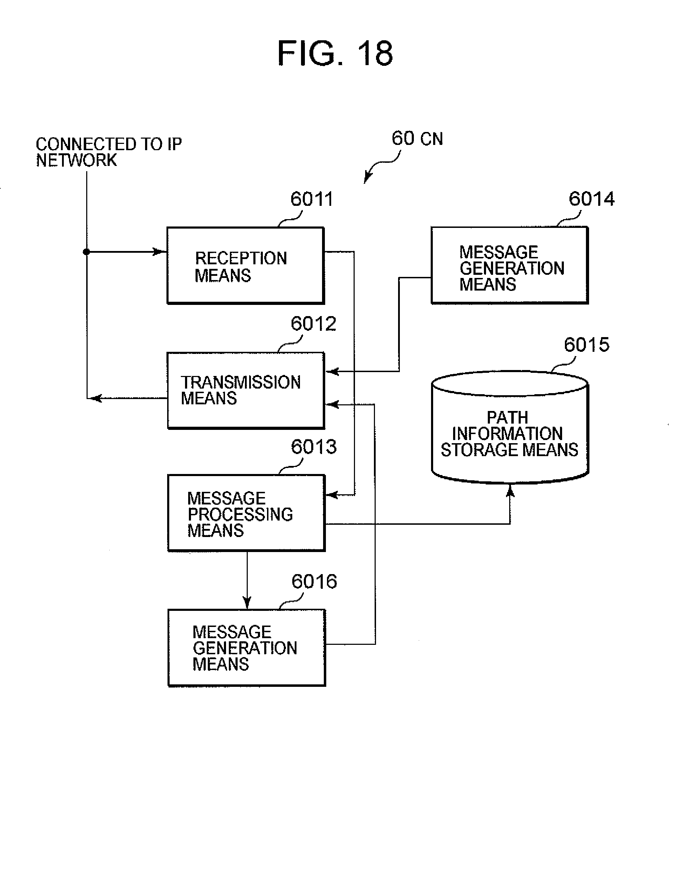

The other methods can be employed as the method whereby the proxy 68 processes CRN information obtained by the message processing means 684 in Fig. 9 (CRN information included in the message C), or CRN information obtained by the message processing means 683 (CRN information included in the message A transmitted by the MN 10), and the method whereby the CN 60 processes CRN information obtained by the message processing means 603 in Fig. 11 (CRN information included in the message B). These methods will now be described while referring to Figs. 17 and 18.

Fig. 17 is a block diagram illustrating the arrangement of a proxy for the embodiment of the present invention that performs a processing method after receiving the message C or after receiving the message A. It should be noted that, as well as for the proxy 68 in Fig. 9, the individual functions of the proxy 68 in Fig. 17 can be provided using hardware and/or software. Furthermore, since reception means 6811, transmission means 6812, message processing means 6813 and 6814, message generation means 6815, 6816 and 6817 and path information storage means 6818 in Fig. 17 include the same functions as those of the reception means 681, the transmission means 682, the message processing means 683 and 684, the message generation means 685, 686 and 687 and the path information storage means 688 in Fig. 9, no further explanation for them will be given.

Message generation means 6819 in Fig. 17 includes a function for generating a message (defined as a message E) to request another node for generation of a QoS path, and for transmitting the message E to the transmission means 6812. The transmission destination of the message E can be, for example, a CRN that is designated through the processing performed for the message B by the message processing means 6814, or a CRN that is included in the message A. In this case, the message E includes information that the CRN needs for generation of a QoS path (e.g., the NCoA of the MN 10 for which the appropriateness is confirmed, the IP address of the CN 60, etc.). When the CRN receives the message E transmitted by the proxy 68, for example, the CRN transmits the RESERVE message to both the CN 60 and the proxy 68, so that the QoS path between the CRN and the CN 60 can be updated, and a new QoS path between the CRN and the proxy 68 can be generated.

Furthermore, Fig. 18 is a block diagram illustrating a CN for the embodiment of the present invention that performs another processing method after receiving a message B. It should be noted that, as well as for the CN 60 in Fig. 11, the individual functions of the CN 60 in Fig. 18 can be provided using hardware and/or software. Further, since reception means 6011, transmission means 6012, message processing means 6013, message generation means 6014 and path information storage means 6015 in Fig. 18 include functions equivalent to those of the reception means 601, the transmission means 602, the message processing means 603, the message generation means 604 and the path information storage means 605 in Fig. 11, no further explanation for them will be given.

Message generation means 6016 in Fig. 18 has a function for generating a message (defined as a message E) to request another node for generation of a QoS path, and transmitting the message E to the transmission means 6012. The transmission destination of the message E can be, for example, a CRN that is designated through the process performed for the message B by the message processing means 6013. In this case, the message E includes information that the CRN needs for generation of a QoS path (e.g., the NCoA of the MN 10, which is obtained by the previously described method and the appropriateness of which is confirmed, the IP address of the proxy 68 that is the transmission source of the message B, etc.). Upon receiving the message E, for example, the CRN transmits the RESERVE message to both the CN 60 and the proxy 68, so that the QoS path between the CRN and the CN 60 can be updated, and a new QoS path between the CRN and the proxy 68 can be generated.

An explanation will now be given for the operation wherein the proxy 68 issues a QoS path generation request to the CRN that is specified upon receiving the message C, or the CRN that is specified upon receiving the message A. Here, a case wherein bidirectional data communication is performed and the bidirectional paths are equal is assumed. However, for a case wherein either upstream or downstream data communication is performed, or a case wherein bidirectional data communication is performed, and the bidirectional paths are different between the upstream side and the downstream side, the same method as will be described later need only be employed separately for the upstream path and the downstream path, so that the QoS path generation request can be issued.

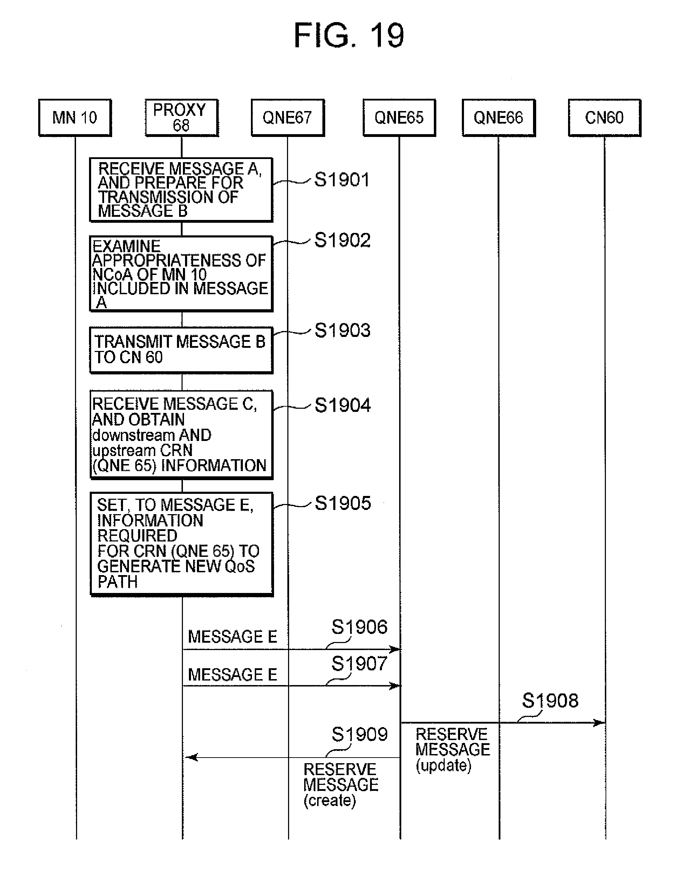

In Fig. 19, a sequence chart is shown for an example operation wherein, when the proxy 68 receives from the MN 10 a message (message A) that includes the NCoA, the proxy 68 issues a request for preparation of a new QoS path to a downstream CRN that is specified by exchanging messages (the message B and the message C) with the CN 60. It should be noted that the sequence chart in Fig. 19 is provided for a case wherein the MN 10 in the network system in Fig. 1 selects the proxy 68 as one of proxies. Further, while the same processes as those at steps S1306 to S1312 in Fig. 13 and at steps S1313 to S1320 in Fig. 14 are performed between steps S1903 and S1904 in Fig. 19, these are not shown.

The proxy 68 generates the message B based on the information included in the message A received from the MN 10. Since it is assumed that bidirectional communication is to be performed here, the proxy 68 sets parameters so that, via the router, upstream information can be obtained from the message B, and downstream information can be obtained from a reply message (message C). Further, the flow identifier and the session identifier transmitted using the message A are designated to the message B (preparation for transmission of the message B (step S1901), and the message B is transmitted to the CN 60 (step S1903). It should be noted that, at this time, the proxy 68 should obtain the address of the CN 60 based on the information of the flow identifier.
In addition to the preparation for transmission of the message B at step S1901, the proxy 68 examines the appropriateness of the NCoA of the MN 10 that is included in the message A (step S1902).

And when the proxy 68 receives the message C that is a reply message of the message B transmitted at step S1903, the proxy 68 refers to the message C and obtains upstream and downstream CRN information (step S1904). The proxy 68 designates, to the message E, information required for the CRNs to establish a new QoS path (step S1905), and transmits the message E to the upstream and downstream CRNs obtained at step S1904 (step S1906 and step S1907). In this case, the QNE 65 serves as both the upstream CRN and the downstream CRN. However, since the interface addresses of the upstream CRN and the downstream CRN obtained at step S1904 may be different from each other (different interface addresses in the QNE 65 are obtained at step S1904 as the upstream CRN and the downstream CRN), the message E is transmitted separately for the upstream and for the downstream. It should be noted that a flow identifier used for a new QoS path, for example, can be employed as information required for the CRN to establish a new QoS path. This new flow identifier can be generated based on the NCoA of the MN 10, for which the appropriateness is confirmed at step S1902. Furthermore, the IP address or the session identifier of the CN 60 can also be employed as information required for the CRN to establish a new QoS path.

Upon receiving the message E, the QNE 65 transmits a RESERVE message to the CN 60 to update a QoS path (step S1908), and also transmits a RESERVE message to the proxy 68 to generate a new QoS path (step S1909). Here, a case wherein both the upstream and downstream QoS paths are updated at step S1908, and both upstream and downstream QoS paths are newly generated at step S1909 is provided.

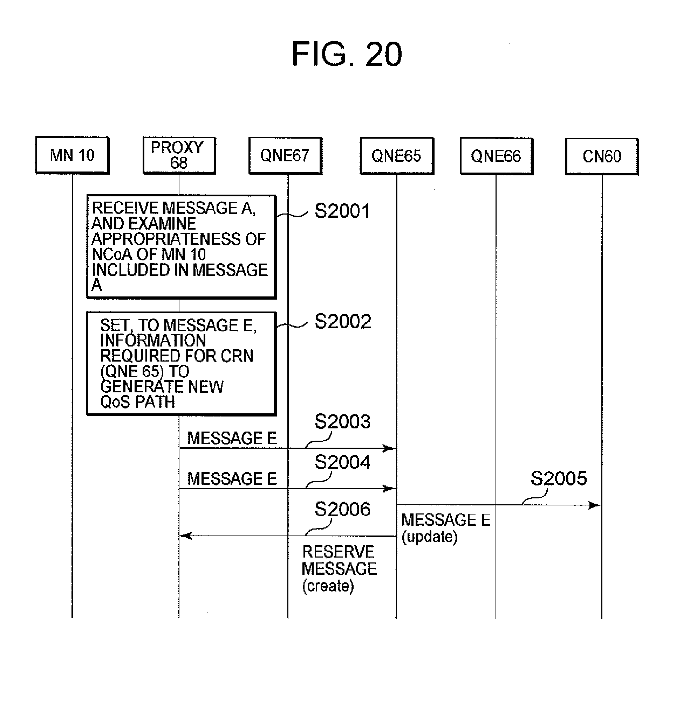

On the other hand, in Fig. 20, a sequence chart is shown for an example operation wherein, when the proxy 68 has received a message (message A) that includes CRN information and the NCoA, the proxy 68 requests the received downstream CRN for preparation of a new QoS path. It should be noted that the sequence chart shown in Fig. 20 is provided for a case wherein the MN 10 in the network system shown in Fig. 1 selects the proxy 68 as one of proxies.

Based on the information for the message A received from the MN 10, the proxy 68 examines the appropriateness of the NCoA of the MN 10 included in the message A (step S2001). And the proxy 68 designates, to the message E, information required for the upstream and downstream CRNs to establish a new QoS path (step S2002), and transmits the message E to the upstream and downstream CRNs that are obtained at step S2001 (step S2003 and step S2004). Here, the QNE 65 serves as both the upstream CRN and the downstream CRN. However, since the interface addresses of the upstream CRN and the downstream CRN obtained at step S2001 may be different from each other (different interface addresses in the QNE 65 are obtained at step S2001 as the upstream CRN and the downstream CRN), the message E is transmitted separately for the upstream and for the downstream. It should be noted that a flow identifier used for a new QoS path, for example, can be employed as information required for the CRN to establish a new QoS path. This new flow identifier can be generated based on the NCoA of the MN 10, for which the appropriateness is confirmed at step S2001. Furthermore, the IP address or the session identifier of the CN 60 can also be employed as information required for the CRN to establish a new QoS path.

Upon receiving the message E, the QNE 65 transmits a RESERVE message to the CN 60 to update a QoS path (step S2005), and also transmits a RESERVE message to the proxy 68 to generate a new QoS path (step S2006). Here, a case wherein both the upstream and downstream QoS paths are updated at step S2005, and two upstream and downstream QoS paths are newly generated at step S2006 is provided.

In addition, the same method can also be employed for a case wherein the CN 60 obtains the upstream CRN information, and thereafter requests the upstream CRN for generation of a new QoS path. In this case, the CN 60 shown in Fig. 18 obtains the upstream CRN information and the appropriate NCoA of the MN 10, and then transmits the message E to the upstream CRN. It should be noted that, in this case, information for the IP address of the proxy 68 can also be included in the message E.

Moreover, the MN 10 can also select the CN 60 as a proxy using the proxy determination means 105 of the MN 10 shown in Fig. 2. Furthermore, the CN 60 may include the same functions as those of the proxy 68 in Fig. 9, in addition to the functions of the CN 60 in Fig. 11, and the proxy 68 may include the same functions as those of the CN 60 in Fig. 11, in addition to those of the proxy 68 shown in Fig. 9. In this case, the CN 60 that has received the message A from the MN 10 can obtain the CRN information by exchanging the message B and the message C with the proxy 68, or can immediately obtain the CRN information in a case wherein the message A includes the CRN information.

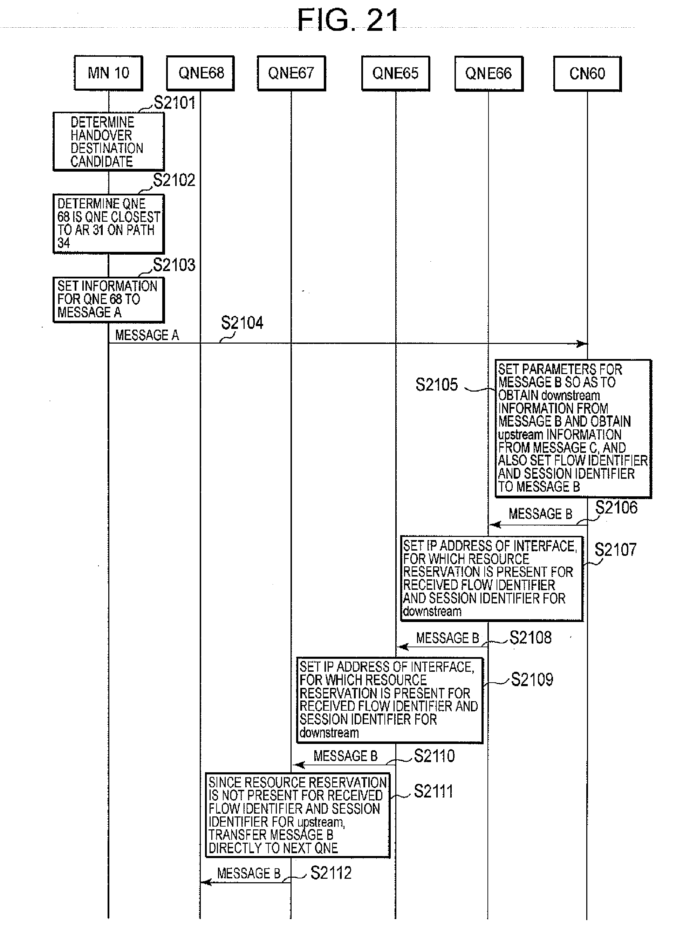

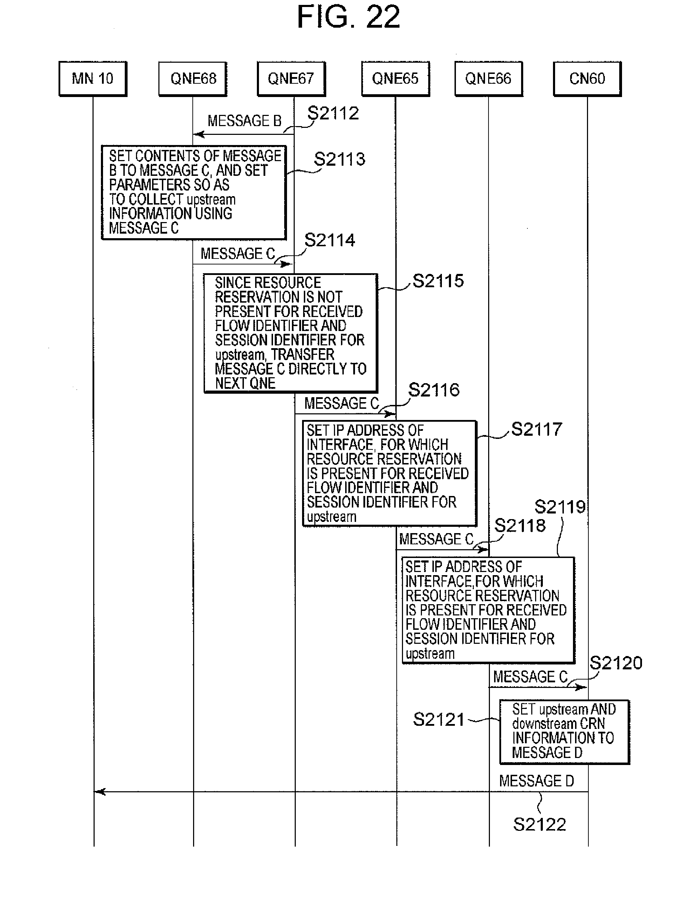

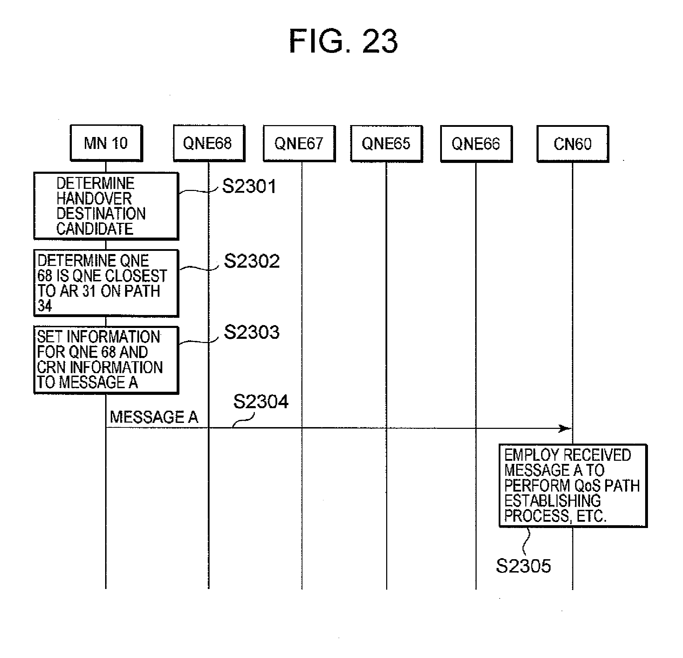

While referring to the sequence charts in Figs. 21 and 22, an explanation will be given for the operation performed for a case wherein, as described above, the CN 60 is selected as the proxy 68, and the CRN information is not included in the message A. It should be noted that the operation sequence for a case wherein CRN information is not included in the message A is shown in the sequence charts in Figs. 21 and 22, and the same process is performed at step S2122 in the sequence charts in Figs. 21 and 22. Further, the sequence charts in Figs. 21 and 22 is provided for a case wherein, in the network system in Fig. 1, the subnet 30 is selected as a moving destination subnetwork candidate for the MN 10, and wherein the CN 60 obtains CRN information, and then returns this information to the MN 10. On the other hand, in the sequence chart in Fig. 23, the operation sequence is shown for a case wherein CRN information is included in the message A. Further, the sequence chart in Fig. 23 is provided for a case wherein, in the network system in Fig. 1, the subnet 30 is selected as a moving destination subnetwork candidate for the MN 10.

In Fig. 21, when the MN 10 receives L2 information from a neighbor AP to which a L2 signal can be reached, first, the MN 10 employs the information to determine a subnetwork for which a handover is enabled (to determine a handover destination candidate) (step S2101). Thereafter, based on the L2 information of the AP, the MN 10 determines a QNE (a QNE closest to the AR 31 on the path 34 in a case wherein the subnet 30 in Fig. 1 is regarded as a moving destination) adjacent to the MN 10 along a QoS path that is to be established when the MN 10 moves to the subnetwork (step S2102). For this determination, the same method as the method for the mode whereby the MN 10 determines the proxy can be employed.

The MN 10 designates, to the message A, information for the QNE (the QNE 68) determined at step S2102 (step S2103). Here, an explanation will be given especially for a case wherein information for the QNE 68 is set to the message A as example information for the QNE determined at step S2102. It should be noted that the upstream flow identifier, the upstream session identifier, the downstream flow identifier and the downstream session identifier for the path 24 and information indicating bidirectional communication may also be designated to the message A. Thereafter, the MN 10 transmits the message A to the CN 60 (step S2104).

The CN 60 generates the message B based on the information for the message A received from the MN 10. Since bidirectional communication is assumed here, parameters are set so that, via a router, downstream information can be obtained from the message B and upstream information can be obtained from the reply message (message C), the flow identifier and the session identifier are designated to the message B (step S2105), and the message B is transmitted to the QNE 66 (step S2106). It should be noted that, in a case wherein information for the flow identifier and the session identifier to be set to the message B is included in the message A, these information included in the message A can be copied to the message B. On the other hand, in a case wherein information for the flow identifier and the session identifier is not included in the message A, the CN 60 can also designate, to the message B, information for the flow identifier and the session identifier that are employed for the current communication with the MN 10.

The individual QNEs 65 to 67 present on the path from the CN 60 to the QNE 68 confirm the contents of the message B, and determine whether a resource reservation for the downstream flow identifier and the downstream session identifier that are included in the message B is present in the QNEs 65 to 67. And in a case wherein there is a resource reservation for the downstream flow identifier and the downstream session identifier, the individual QNEs 65 to 67 add, to the message B, the IP addresses of the interfaces, for which the resource reservation is present, and transmit the message B to the QNE 68. On the other hand, in a case wherein a resource reservation for the downstream flow identifier and the downstream session identifier is not present, the message B is transferred unchanged, without information being added.

It should be noted that a resource reservation for the downstream flow identifier and the downstream session identifier is present at the QNE 66. Thus, the IP address of the interface, for which the resource reservation is present, is added to the message B, and the message B is transferred (steps S2107 and S2108). Further, since a resource reservation for the downstream flow identifier and the downstream session identifier is present at the QNE 65 as well as the QNE 66, the IP address of the interface, for which the resource reservation is present, is added to the message B, and the message B is transferred (steps S2109 and S2110). On the other hand, since a resource reservation for the downstream flow identifier and the downstream session identifier is not present at the QNE 67, the message B is transferred unchanged, without information being added (steps S2111 and S2112).

Sequentially, the message B is finally reached to the QNE 68, and the QNE 68 that has received the message B designates, to the message C, information (information added to the message B by the individual QNEs 65 to 67) that is added by the individual QNEs 65 to 67, sets parameters so as to collect information on the upstream path using the message C (step S2113), and transmits the message C to the CN 60 (step S2114). Furthermore, in a case wherein the individual QNEs 67 to 67 located on the path from the QNE 68 to the CN 60 receive the message C, the same process as the above described process for the message B is performed for the upstream message C.

That is, since a resource reservation for the upstream flow identifier and the upstream session identifier is not present at the QNE 67, the message C is transferred unchanged, without information being added (steps S2115 and S2116). Further, since a resource reservation for the upstream flow identifier and the upstream session identifier is present at the QNE 65, the IP address of the interface, for which the resource reservation is present, is added to the message C, and the message C is transferred (steps S2117 and S2118). In addition, since a resource reservation for the upstream flow identifier and the upstream session identifier is present at the QNE 66 as well as the QNE 65, the IP address of the interface, for which the resource reservation is present, is added to the message C, and then, the message C is transferred (steps S2119 and S2120).

When the CN 60 receives the message C in this manner, the CN 60 can specify upstream and downstream CRN information by referring to the message C, designates the upstream and downstream CRN information to the message D (step S2121), and transmits the message D to the MN 10 (step 2122).

Furthermore, while referring to the sequence chart in Fig. 23, an explanation will be given for the operation performed for a case wherein the CN 60 is selected as the proxy 68 and CRN information is included in the message A. In Fig. 23, when the MN 10 receives L2 information from the neighbor AP to which a L2 signal can be reached, first, the MN 10 employs the information to determine a subnetwork for which a handover is enabled (determine a handover destination candidate) (step S2301). Then, the MN 10 employs the L2 information for the AP to determine a QNE (a QNE closest to the AR 31 on the path 34 in a case wherein the subnet 30 is regarded as a moving destination in Fig. 1) adjacent to the MN 10 on a QoS path that is to be established when the MN 10 is to move to the subnetwork (step S2302). For this determination, the same method as the method for the mode whereby the MN 10 determines a proxy can be employed.

The MN 10 sets, to the message A, information for the QNE (the QNE 68) determined at step S2302 and information for the CRN that is found in the above described manner (step S2303). Here, an explanation will be given especially for a case wherein, as example information for the QNE determined at step S2302, information for the QNE 68 is set to the message A. It should be noted that the upstream flow identifier, the upstream session identifier, the downstream flow identifier and the downstream session identifier for the path 24, and information indicating bidirectional communication can also be designated to the message A. Thereafter, the MN 10 transmits this message A to the CN 60 (step S2304). Based on the CRN information included in the message A received from the MN 10, the CN 60 shifts the program control to the processing for establishing a QoS path (step S2305).

It should be noted that, as described above for the functions of the MN 10, the CN 60 can employ various means, other than means for collecting CRN information and then transmitting the CRN information to the MN 10. Further, here, it is assumed that bidirectional data communication is performed, and data is bidirectionally transmitted in the same path. However, the same method as described above can also be employed for a case wherein data is bidirectionally transmitted along different paths, so that CRNs for bidirectional communication can be determined.

Each functional block used in the explanations of each embodiment of the present embodiment, described above, can be realized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI.

The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used.

Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

It should be noted that the expression of a transmission destination described in this specification, for example, the expression of transmission to the CN 60, does not necessarily define that the address of the CN 60 is designated as the transmission destination address of the IP header for transmission, and defines that the final recipient of a message is the CN 60.

### INDUSTRIAL APPLICABILITY

The crossover node detection method according to the present invention and the crossover node detection program that permits a computer to perform this method relate to a crossover node detection method, through a handover performed by a mobile node that performs wireless communication, and a crossover node detection program that permits a computer to perform this method, whereby a quick discovery of a CRN is enabled, so that, after a handover is performed, a mobile node that performs a handover can quickly and continuously receive additional service that is received before the handover is performed. Especially, the method and the program are useful as a crossover node detection method through a handover performed by a mobile node that performs wireless communication using the mobile IPv6 protocol, which is the next generation Internet protocol, and a crossover node detection program that permits a computer to perform this method.

## Claims

1. A crossover node detection method, for a communication system wherein a plurality of access routers that form subnets are connected via a communication network, and at least one or more access points that form unique communication enabled areas are connected respectively to the plurality of access routers, for detecting a crossover node at which new and old communication paths on the communication network merge together, and are separated in a case wherein a mobile node, which is so designed as to perform wireless communication with the access points within the communication enabled areas to communicate with the access routers to which the access points are connected, moves, and a connection is changed from an access point that is currently used for communication to a different access point, comprising the steps of:
the mobile node transmitting, to a device that includes past handover history information for the mobile node and the other mobile node, a message that includes information required for detecting the crossover node;
the device judging, based on information included in the received message, whether corresponding crossover node information is present in the past handover history information included in the device, and when the information is present, transmitting the crossover node information to the mobile node; and
the mobile node receiving the crossover node information transmitted by the device.

2. The crossover node detection method according to claim 1, wherein the handover history information includes at least one or more types of information from along information for a subnet used before the mobile node moves, information for a subnet used after the mobile node moves, information for a subnet at a communication destination of the mobile node, information for a crossover node at which new and old communication paths merge together by the movement, information for a link from an access router that forms the subnet used after the movement to the crossover node at which the new and old communication paths merge together, and information for a link from the crossover node at which the new and old communication paths merge together to the access router that forms the subnet used after the movement.

3. The crossover node detection method according to claim 1, wherein the information required for detecting the crossover node is at least one or more types of information from among information for a subnet used before the mobile node moves, information for a subnet after the mobile node moves and information for a subnet at a communication destination of the mobile node.

4. The crossover node detection method according to claim 1, wherein the device that includes the handover history information is an access router that forms the subnet used after the mobile node moves.

5. The crossover node detection method according to claim 1, wherein the device that includes the handover history information is an access router that forms the subnet used before the mobile node moves.

6. The crossover node detection method according to claim 1, wherein the device that includes the handover history information is the crossover node at which the new and old communication paths merge together, and are separated.

7. A crossover node detection program that permits a computer to perform a crossover node detection method according to one of claims 1 to 6.
